(19) Europäisches Patentamt
European Patent Office
Office européen des brevets

(11) **EP 3 336 594 B1**

(12) **FASCICULE DE BREVET EUROPEEN**

(45) Date de publication et mention
de la délivrance du brevet:
**19.05.2021 Bulletin 2021/20**

(51) Int Cl.:
***G02B 17/06*** *(2006.01)*       ***G02B 23/06*** *(2006.01)*
***G02B 26/06*** *(2006.01)*       ***G02B 27/00*** *(2006.01)*

(21) Numéro de dépôt: **17205097.3**

(22) Date de dépôt: **04.12.2017**

(54) **TELESCOPE COMPACT PRESENTANT UNE PLURALITE DE FOCALES COMPENSE PAR DES COMPOSANTS OPTIQUES ASPHERIQUES**

KOMPAKTES TELESKOP, DAS EINE VIELZAHL VON BRENNWEITEN AUFWEIST, DIE DURCH ASPHÄRISCHE OPTISCHE KOMPONENTEN KOMPENSIERT WIRD

COMPACT TELESCOPE HAVING A PLURALITY OF FOCAL DISTANCES COMPENSATED BY NON-SPHERICAL OPTICAL COMPONENTS

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **13.12.2016 FR 1601770
09.03.2017 FR 1700254**

(43) Date de publication de la demande:
**20.06.2018 Bulletin 2018/25**

(73) Titulaire: **Thales
92400 Courbevoie (FR)**

(72) Inventeur: **TETAZ, Nicolas
06156 CANNES (FR)**

(74) Mandataire: **Marks & Clerk France
Immeuble "Visium"
22, avenue Aristide Briand
94117 Arcueil Cedex (FR)**

(56) Documents cités:
**US-A- 4 993 818     US-A- 5 144 476
US-A- 6 084 727**

• **ZHAO XIN ET AL: "Three mirror anastigmatic zoom system using deformable mirrors", INTERNATIONAL SYMPOSIUM ON PHOTOELECTRONIC DETECTION AND IMAGING 2011: SPACE EXPLORATION TECHNOLOGIES AND APPLICATIONS, SPIE, 1000 20TH ST. BELLINGHAM WA 98225-6705 USA, vol. 8196, no. 1, 9 juin 2011 (2011-06-09) , pages 1-8, XP060016106, DOI: 10.1117/12.900730**

EP 3 336 594 B1

**Description**

**DOMAINE DE L'INVENTION**

Le domaine de l'invention est celui des télescopes, notamment celui des télescopes d'observations embarqués dans des satellites. Plus précisément, le domaine de l'invention concerne les systèmes catoptriques à grandes focales.

**ETAT DE LA TECHNIQUE**

Les télescopes spatiaux actuels sont à focale unique. Un type de télescope connu est le télescope de type Korsh. Le télescope de type Korsh, également dénommé TMA (acronyme de l'expression anglo-saxonne « Three Mirors Anastigmat ») est un télescope anastigmat à trois miroirs asphériques (soit de type Concave-Convexe-Concave) qui comprend au moins un premier miroir M1 concave, un second miroir M2 convexe et un troisième miroir M3 concave. Les trois miroirs étant asphériques et de forme classique pour un tel télescope. Les premier, deuxième et troisième miroirs M1, M2 et M3 sont asphériques, de formes fixes, chaque miroir étant caractérisé par au moins deux paramètres, un rayon de courbure R et une conique c.
Ce système optique présente un axe optique O bien connu de l'homme de l'art, défini par le rayon passant par le centre de la pupille d'entrée $P_E$ et perpendiculaire à cette pupille.
Les trois miroirs M1, M2 et M3 sont agencés de sorte que le premier miroir et le second miroir forment d'un objet à l'infini une image intermédiaire disposée dans un plan focal intermédiaire $P_{FI}$ situé entre le second miroir et le troisième miroir, le troisième miroir formant de cette image intermédiaire une image finale dans le plan focal $P_F$ du télescope dans lequel est placé un détecteur D. Par application des équations de Korsch bien connues de l'homme de l'art on calcule aisément les positions et paramètres respectifs des trois miroirs. La solution théorique est de très bonne qualité, ce qui fait tout l'intérêt de ce type de télescope.
La qualité d'un système optique s'évalue par comparaison entre l'onde lumineuse idéale limitée par la diffraction et l'onde lumineuse réelle à la sortie du système optique tenant compte des défauts du système optique traversé. L'analyse de la différence entre onde théorique et onde réelle permet d'identifier les types de défauts ou aberrations du système optique.
Il est connu que les principales aberrations géométriques sont : l'aberration sphérique, l'astigmatisme, la coma, la courbure de champ (defocus dans le champ) et la distorsion.
Des polynômes, et plus particulièrement les polynômes de Zernike, sont classiquement utilisés pour qualifier plus facilement les différents types d'aberrations d'un front d'onde (soit une surface) à la sortie d'un système optique.
Les surfaces de Zernike sont les plus couramment utilisées. Une surface de Zernike est définie en coordonnées polaires dans un espace $(\rho, \theta, z)$, et si $z(\rho, \theta)$ représente la coordonnée z d'un point de cette surface, on a la relation :

$$z(\rho,\theta) = \frac{c(\rho^2)}{1 + \sqrt{1 - (1+k)c^2\rho^2}} + \sum C_j Z_j \qquad (1)$$

Zj étant un polynôme de Zernike d'ordre j et Cj étant la constante associée à ce polynôme, j étant un indice variant respectivement entre 0 et un nombre entier, k étant la constante de conicité et c la courbure de la surface.
Une surface quelconque décomposée suivant des polynômes est dénommée surface $\varphi$-polynomiale. Cette surface est donc caractérisée par des valeurs des coefficients de ces polynômes.
L'intérêt de la décomposition de font d'onde en polynômes de Zernicke orthogonaux est que chaque polynôme de la base considérée correspond à une catégorie d'aberration géométrique différente. Il est alors possible de connaître la nature des aberrations présentes dans un front d'onde.
La table I ci-dessous illustre les différents polynômes « Fringe Zernike » en fonction que de leur ordre (ici 1 à 16), ainsi que le type l'aberration correspondant.

Table I

| Ordre | Polynôme | Aberration (s) |
|---|---|---|
| 1 | 1 | Piston |
| 2 | $\rho \, \mathrm{Cos}[\theta]$ | Inclinaison en x |
| 3 | $\rho \, \mathrm{Sin}[\theta]$ | Inclinaison en y |
| 4 | $-1 + 2\rho^2$ | Focalisation |

(suite)

| Ordre | Polynôme | Aberration (s) |
|---|---|---|
| 5 | $\rho^2 \, Cos[2\,\theta]$ | Astigmatisme à 0° |
| 6 | $\rho^2 \, Sin[2\,\theta]$ | Astigmatisme à 45° |
| 7 | $\rho \, (-2 + 3\,\rho^2) \, Cos[\theta]$ | Coma en x |
| 8 | $\rho(-2 + 3\,\rho^2) \, Sin[\theta]$ | Coma en y |
| 9 | $1 - 6\,\rho^2 + 6\,\rho^4$ | Sphéricité et focalisation |
| 10 | $\rho^3 \, Cos[3\,\theta]$ | Tri feuille |
| 11 | $\rho^3 \, Sin[3\,\theta]$ | Tri feuille |
| 12 | $\rho^2 \, (-3 + 4\,\rho^2) \, Cos[2\,\theta]$ | Astigmatisme ordre 2 |
| 13 | $\rho^2 \, (-3 + 4\,\rho^2) \, Sin[2\,\theta]$ | Astigmatisme ordre 2 |
| 14 | $\rho \, (3 - 12\,\rho^2 + 10\,\rho^4) \, Cos[\theta]$ | Coma en x ordre 2 |
| 15 | $p \, (3 - 12\,\rho^2 + 10\,\rho^4) \, Sin[\theta]$ | Coma en y ordre 2 |
| 16 | $-1 + 12\,\rho^2 - 30\,\rho^4 + 20\,\rho^6$ | Sphéricité ordre 2 |

En adoptant la définition des polynômes de Fringe Zernike, les différents types d'aberration correspondent à :

- le focus correspond au terme Z4,

- l'astigmatisme correspond aux termes Z5 et Z6,

- la coma aux termes Z7 et Z8 et

- l'aberration sphérique de premier ordre à Z9.

- l'aberration sphérique de deuxième ordre à Z16

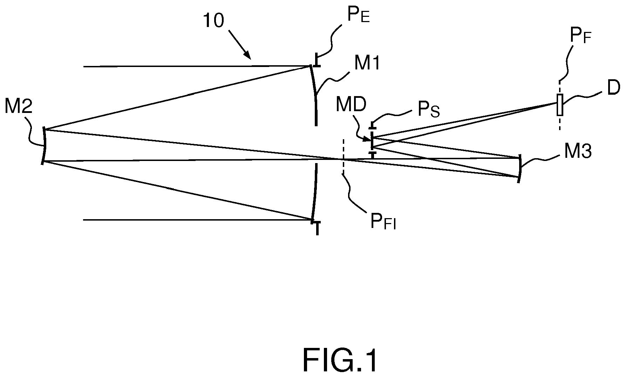

Classiquement il est connu d'améliorer la qualité de l'image des instruments optiques par adjonction d'un miroir déformable MD en pupille de sortie, communément dénommé à surface « free form » » ou de forme libre, tel qu'illustré figure 1 pour un TMA monofocale.
Mais la solution théorique du télescope à 3 miroirs Korsch étant de très bonne qualité, celui-ci n'intervient pas dans la combinaison optique du télescope et est utilisé uniquement pour compenser les défauts dû à l'imperfection de réalisation du système réel par rapport à la solution théorique (turbulences atmosphériques, défauts du miroir M1). Ainsi, on utilise généralement un miroir déformable en pupille de sortie pour corriger les aberrations constantes dans le champ. Lorsqu'il est positionné en pupille d'un instrument, la déformation du miroir déformable par ajout d'un polynôme de Zernike introduit des aberrations constantes dans le champ. Par exemple, si l'on introduit une valeur non nulle pour le polynôme Z5 sur le miroir déformable, chaque point du champ sera impacté par de l'astigmatisme. Dans le cas général la surface S à donner au miroir déformable pour permettre la correction des défauts est dénommée surface « free form », signifiant qu'elle n'a pas de symétrie de révolution (voir formule générale (1) et table I).
La formulation (1) est une base mathématique de polynômes orthogonaux permettant de définir une surface à symétrie de révolution ou non.
Une surface asphérique est une surface à symétrie de révolution qui ne peut être décrite par un unique rayon de courbure (comme une sphère) car la courbure locale change le long de la surface.
La définition classique d'une surface asphérique définie dans un espace (p, z) est :

$$Z = \frac{\dfrac{\rho^2}{R}}{1 + \sqrt{1 - (1+k)\cdot\dfrac{\rho^2}{R^2}}} + A\cdot\rho^4 + B\cdot\rho^6 + C\cdot\rho^8 + \dots \quad (2)$$

R est le rayon du courbure, k la constante de conicité, les termes A, B, C les coefficients d'asphéricité du 4e, 6e et 8e ordre.

En comparant avec la formule (1) et le tableau I avec la formule (2), on remarque qu'une surface asphérique décomposée sous la forme de polynômes de Zernike présente du Z4, du Z9 et du Z16 (polynômes de Fringe Zernicke fonction de $\rho$ uniquement, c'est-à-dire uniquement à symétrie de révolution) et pas de Z5, Z6, Z7, Z8, Z10 à Z15 (coefficients fonction de $\theta$), ces derniers coefficients étant donc nuls pour ce type de surface.

Lorsqu'on utilise un miroir MD déformable et pilotable pour compenser les aberrations d'un système, on peut obtenir une surface quelconque souhaitée en pilotant le miroir, la surface souhaitée du MD étant calculée de manière à compenser les défauts du système réel. On décompose la surface souhaitée à l'aide des polynômes, et on génère cette surface en appliquant de manière maîtrisée les bons coefficients via le système de pilotage du miroir. On peut ensuite faire évoluer la forme de la surface en modifiant les valeurs des coefficients.

Il est ainsi possible en pilotant directement la valeur des coefficients Cj d'introduire dans le design les aberrations voulues.

Par ailleurs il peut être intéressant de pouvoir changer la focale en vol. En effet, changer la focale en vol permet de changer le champ de vue et/ou la résolution de l'image avec un seul et même instrument.

Il existe actuellement deux familles de télescopes :

- les télescopes bifocaux qui permettent d'effectuer une prise d'image à haute résolution mais sur un champ étroit ou une prise d'image sur un champ étendu mais à plus faible résolution, et
- les télescopes à zoom réflectif continu permettant un changement de focale en vol.

Comme exemples de télescopes bifocaux, on peut citer ceux qui reposent sur une séparation d'une voie commune en deux voies de focales différentes. La séparation peut se faire de manière spectrale : un même champ est séparé par une lame dichroïque si le domaine de longueur d'onde permet cette séparation spectrale (ex : visible et infrarouge). Elle peut se faire en séparant le flux reçu en flux réfléchi et flux transmis, au moyen d'une densité optique s'il s'agit d'un domaine de longueur d'onde non disjoint (ex : 50% du flux est réfléchi, 50% transmis).

Avantages de ces solutions bifocales à séparation de voie commune :

- Fonction bifocale en simultanée,
- Observation d'un champ de vue commun.

Inconvénients de ces solutions :

- Ajout d'éléments optiques (lame dichroïque/densité + miroirs/lentilles spécifiques à chacune des voies),
- Détecteurs spécifiques à chaque voie,
- Si le domaine spectral des voies n'est pas disjoint, cela nécessite de perdre une partie importante du flux,
- Seulement bifocal.

On peut aussi citer les télescopes à séparation dans le champ de vue : les deux voies n'ont alors pas le même champ de vue.

Avantage de ces solutions bifocales à séparation dans le champ de vue :

- fonction bifocale en simultanée.

Inconvénients de ces solutions :

- Ajout d'éléments optiques : miroirs/lentilles spécifiques à chacune des voies,
- Détecteurs spécifiques à chaque voie,
- Observation d'un champ de vue différent,
- Seulement bifocal.

Une autre solution bifocale décrite dans le brevet US 6084727 permet de changer la focale du télescope en insérant des éléments réflectifs sur le trajet optique.

Avantages de cette solution à insertion d'éléments réflectifs :

- Un seul détecteur,
- Observation d'un champ commun.

Inconvénients de cette solution :

- Ajout d'éléments optiques : miroirs spécifiques à l'une des voies,

- Seulement bifocal,
- Fonction bifocale non simultanée.

Comme exemple de télescope à zoom réflectif continu, on peut citer le télescope décrit dans le brevet US 6333811 ; il est basé sur un télescope de type Cassegrain avec reprise d'image dont le grandissement est variable ce qui permet d'obtenir un zoom continu. Avantages de cette solution :

- Un seul détecteur,
- Zoom continu,
- Observation d'un champ commun,
- Pas de modification de la forme des miroirs.

Inconvénients de cette solution :

- Le nombre de miroirs : 7 miroirs dont 3 asphériques, 2 « freeform » et 1 miroir plan de renvoi,
- Déplacement de deux miroirs freeforms dont le positionnement peut être sensible,
- Télescope de type Cassegrain, donc à champ limité.

Il existe par ailleurs des zooms utilisant des miroirs à rayons de courbure déformables, dont un exemple est illustré dans la publication de Kristof Seidl et al. : « Wide field-of-view all-reflective objectives designed for multispectral image acquisition in photogrammetric applications ».
Avantages de cette solution :

- Un seul détecteur,
- Zoom continu,
- Observation d'un champ commun,
- Pas de déplacement des miroirs.

Inconvénients de cette solution :

- Trop encombrant pour de longues focales, par exemple supérieures à 10m,
- Les miroirs déformables ne fonctionnent que pour des miroirs sphériques à petits diamètres de l'ordre de quelques cm : ils ne sont donc pas compatibles des tailles de pupilles des télescopes spatiaux typiquement supérieures à 0.5m.

D'autres télescopes conventionnels sont divulgués dans les documents US4993818, US6084727, US5144476, ainsi que dans la publication de ZHAO XIN et al: "Three mirror anastigmatic zoom system using deformable mirrors",INTERNATIONAL SYMPOSIUM ON PHOTOELECTRONIC DETECTION AND IMAGING 2011: SPACE EXPLORATION TECHNOLOGIES AND APPLICATIONS, SPIE, 1000 20TH ST. BELLINGHAM WA 98225-6705 USA, vol. 8196, no. 1, 9 juin 2011, pp. 1-8.

Ainsi il n'existe actuellement aucun télescope de type TMA multifocales présentant une très grande qualité optique pour toute les focales et qui n'utilise pas de composant onéreux tel un miroir déformable.

Un but de la présente invention est de palier aux inconvénients précités en proposant un télescope à trois miroirs asphériques multifocal, mono détecteur et compact, fonctionnant pour des diamètres de pupille importants, avec un champ de vue plus important que celui d'un Cassegrain (>1°), présentant une très grande qualité d'image pour toutes les focales en étant compensé avec des composants « classiques » asphériques ne présentant pas de fonction déformable « free-form ».

## DESCRIPTION DE L'INVENTION

La présente invention a pour objet un télescope tel que défini dans la revendication indépendante 1, ainsi qu'un procédé de détermination de paramètres d'un télescope tel que définie dans la revendication indépendante 16.

Préférentiellement la forme de la surface de chaque composant asphérique comprend en outre une aberration sphérique de deuxième ordre pour améliorer encore la qualité d'image selon ledit critère.
Avantageusement la nouvelle conicité s'écarte de la conicité initiale de plus de 5% et de moins de 30 %
Selon un mode de réalisation une nouvelle conicité du premier miroir et une nouvelle conicité du deuxième miroir sont déterminées à partir respectivement d'une conicité initiale du premier miroir et d'une conicité initiale du deuxième miroir, les conicités initiales étant déterminées à partir des équation de Korsch,
les nouvelles conicités étant déterminées de manière à améliorer encore la qualité d'image dudit télescope selon ledit critère.

Préférentiellement chaque surface d'un composant asphérique est définie à partir des coefficients des polynômes de Fringe Zernike Z4, Z9 et le cas échéant Z16.

Selon un mode de réalisation on définit :

- un astigmatisme positif comme un astigmatisme pour lequel un foyer tangentiel se situe avant un foyer sagittal,
- un astigmatisme négatif comme un astigmatisme pour lequel un foyer sagittal se situe avant un foyer tangentiel,
- une coma positive comme une coma pour laquelle une forme de la tache image d'un point source est une « comète » dont la queue s'éloigne de l'axe optique et,
- une coma négative comme une coma pour laquelle une forme de la tache image d'un point source est une « comète » dont la queue est dirigée vers l'axe optique,

les aberrations compensables étant de l'astigmatisme positif et de la coma positive pour la focale maximale, de l'astigmatisme positif et de la coma négative pour la focale minimale.

Préférentiellement on définit la nouvelle conicité du troisième miroir est déterminée de manière à modifier le signe de l'astigmatisme du télescope pour la focale minimale, sans la présence de composant asphérique. Préférentiellement le critère prédéterminé consiste à minimiser une erreur de forme d'onde.

Préférentiellement lesdites positions des composants asphériques sont séparées les une des autres de 50 mm au maximum.

Selon un mode de réalisation au moins un composant asphérique est escamotable de manière à être disposé sur le chemin optique du faisceau correspondant à la focale associée lorsque le télescope fonctionne à ladite focal associée, et en dehors des chemins optiques associés aux autres focales lorsque le télescope fonctionne à une de ces autres focales. Avantageusement les composants optiques asphériques sont des miroirs escamotables.

Avantageusement les miroirs escamotables sont montés sur un support unique, les positions des miroirs escamotables étant alors sensiblement identiques.

Selon un mode de réalisation les composants asphériques sont des miroirs escamotables montés sur un support unique, le support comprenant en outre une position pour laquelle aucun miroir escamotable ne figure sur le chemin optique du faisceau incident sur ledit support, le faisceau passant alors au travers du support selon un chemin optique secondaire, le télescope comprenant en outre :

- un dispositif optique disposé sur le chemin optique secondaire, configuré pour générer un deuxième plan focal du télescope correspondant à une focale choisie, ledit dispositif optique étant en outre configuré pour corriger lesdites aberrations compensables dudit télescope et pour optimiser la qualité d'image dans le deuxième plan focal du télescope selon ledit critère prédéterminé et,
- un deuxième détecteur disposé dans le deuxième plan focal du télescope , et sensible dans une deuxième bande spectrale différente d'une première bande spectrale de sensibilité du premier détecteur.

Avantageusement le dispositif optique est adapté pour fonctionner en transmission dans la deuxième bande spectrale, la première bande spectrale est comprise dans le visible et la deuxième bande spectrale est comprise dans l'infrarouge, et la focale choisie présente une valeur inférieure à la focale minimale.

Selon un autre mode de réalisation au moins un composant asphérique est une lame fonctionnant en transmission.

Selon une variante le télescope selon l'invention comprend uniquement deux focales, la focale minimale et la focale maximale.

D'autres caractéristiques, buts et avantages de la présente invention apparaîtront à la lecture de la description détaillée qui va suivre et en regard des dessins annexés donnés à titre d'exemples non limitatifs et sur lesquels :

La figure 1 déjà citée illustre un télescope de type Korsch monofocale présentant un miroir déformable disposé au niveau de la pupille de sortie du télescope.

La figure 2 illustre un télescope de type Korsch multifocal vu dans un plan YZ, la focale étant rendue variable par déglacement du triosième miroir sur l'axe optique. La figure 2a décrit le système optique pour la focale maximale et la figure 2b décrit le système optique pour la focale minimale.

La figure 3 illustre le télescope de la figure 2 vu dans le plan XZ, la figure 3a décrit le système optique pour la focale maximale et la figure 3b décrit le système optique pour la focale minimale.

La figure 4a décrit une première variante de moyen de variation du chemin optique entre le troisième miroir et le détecteur D.

La figure 4b illustre une deuxième variante de moyen de variation du chemin optique entre le troisième miroir et le détecteur D dans laquelle le détecteur D est fixe, les moyens de variation du chemin optique comprenant deux miroirs T1 et T2 en forme de toit, pour une position du miroir T2.

La figure 4c illustre la deuxième variante de moyen de variation du chemin optique entre le troisième miroir et le détecteur D dans laquelle le détecteur D est fixe, les moyens de variation du chemin optique comprenant deux miroirs T1 et T2 en forme de toit, pour une autre position du miroir T2.

La figure 4d illustre une troisième variante dans laquelle les moyens de variation du chemin optique entre le troisième miroir et le détecteur D comprennent des miroirs classiques fixes et au moins un miroir classique escamotable....

La figure 5 illustre les aberrations présentes dans le plan focal pour le télescope bifocal dont les miroirs asphériques M1, M2 et M3 ont les paramètres initiaux obtenus en résolvant les équations de Korsch. La figure 5a illustre ces aberrations lorsque le télescope fonctionne à la focale maximale, et la figure 5b illustre ces aberrations lorsque le télescope fonctionne à la focale minimale.

La figure 6 décrit la convention signe utilisée pour certaines catégories d'aberrations.

La figure 7 schématise un télescope de type Korsh selon l'invention.

La figure 8 illustre une première variante du télescope selon l'invention dans laquelle tous les composants asphériques CAi sont des miroirs asphériques escamotables.

La figure 9 illustre un exemple de télescope bifocal selon la première variante de l'invention.

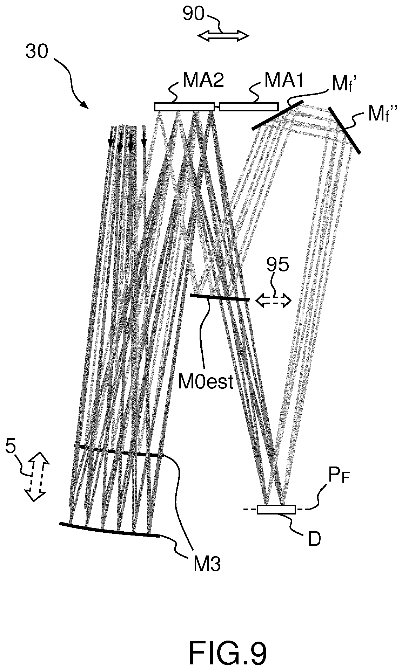

La figure 9bis illustre un exemple de support pour les miroirs escamotables d'un télescope bifocal selon l'invention.

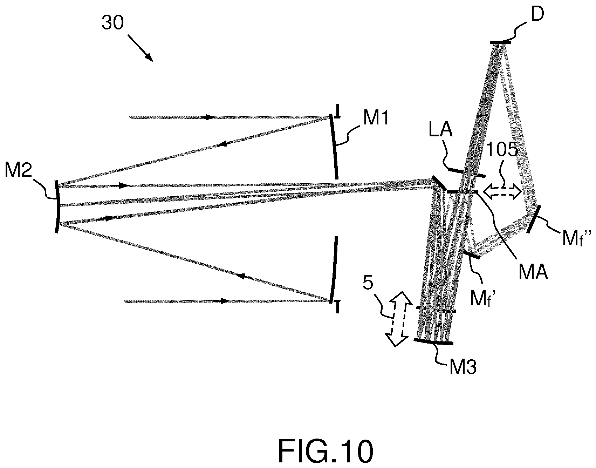

La figure 10 illustre une deuxième variante du télescope selon l'invention dans laquelle au moins un composant asphérique est une lame fonctionnant en transmission.

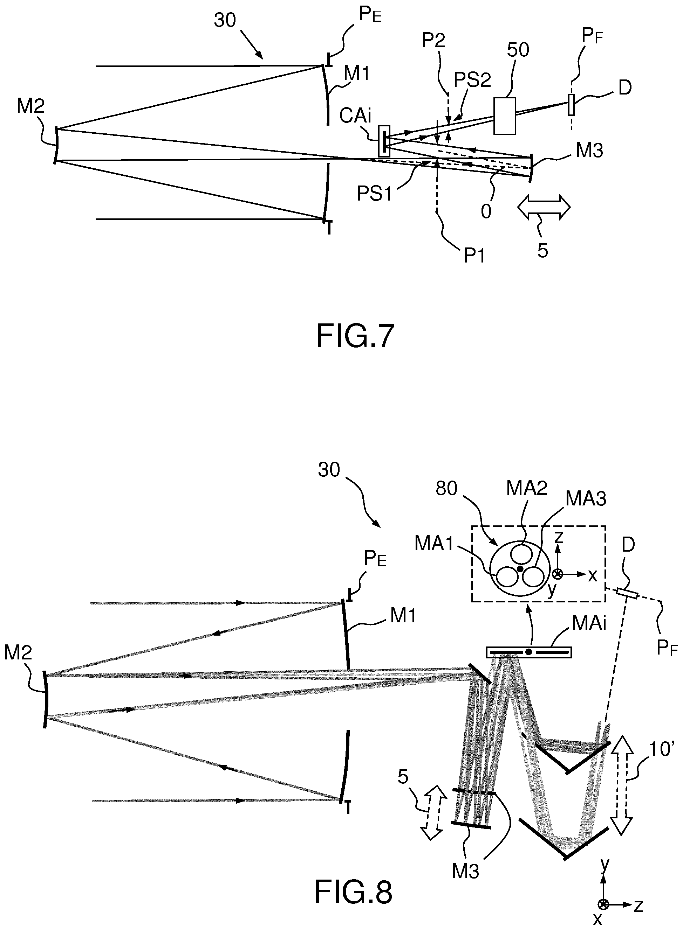

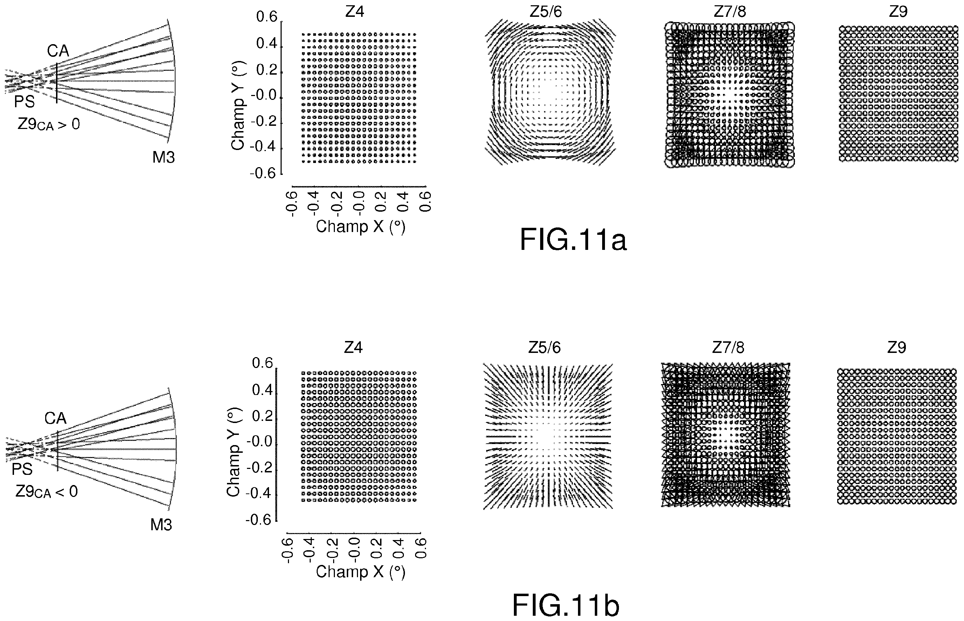

La figure 11 illustre, pour le système initial, les aberrations résultantes suite à l'introduction d'aberration sphérique $Z9_{CA}$ sur un composant asphérique CA en fonction de sa position relative par rapport à la pupille de sortie effective, lorsque CA est disposé en aval de la pupille de sortie effective. La figure 11a correspond à $Z9_{CA} < 0$ et la figure 8b à $Z9_{CA} > 0$.

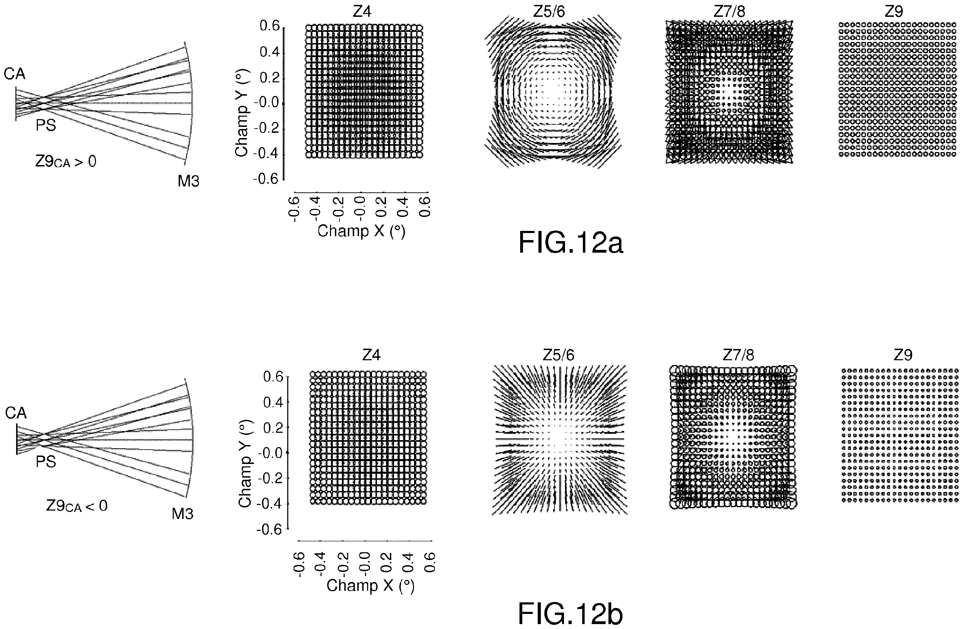

La figure 12 illustre, pour le système initial, les aberrations résultantes suite à l'introduction d'aberration sphérique $Z9_{CA}$ sur un composant asphérique CA en fonction de sa position relative par rapport à la pupille de sortie effective, lorsque CA est disposé en amont de la pupille de sortie effective. La figure 9a correspond à $Z9_{CA} < 0$ et la figure 9b à $Z9_{CA} > 0$.

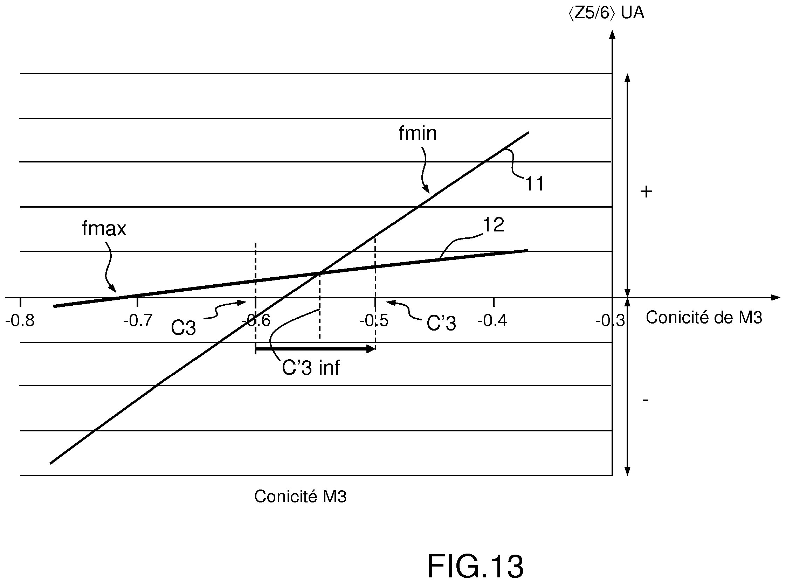

La figure 13 décrit l'évolution de la valeur moyenne de l'astigmatisme du télescope en fonction de la valeur de conicité du M3.

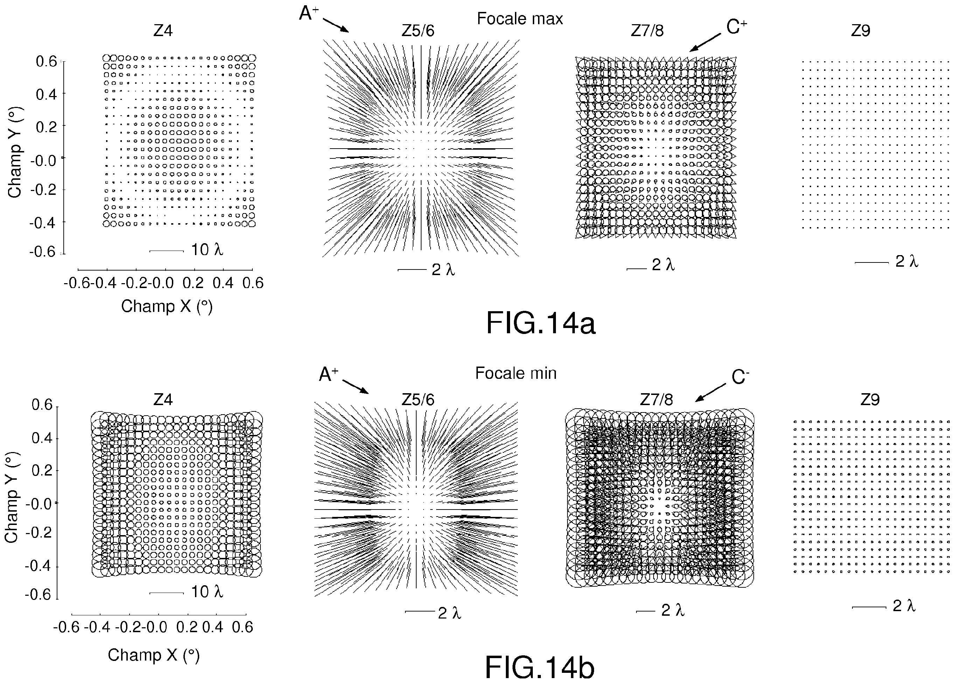

La figure 14 illustre les différentes aberrations présentes dans le premier plan focal du télescope, avec M3 présentant une conicité c'3=-0.52, la figure 14a pour la focale max et la figure 14b pour la focale min.

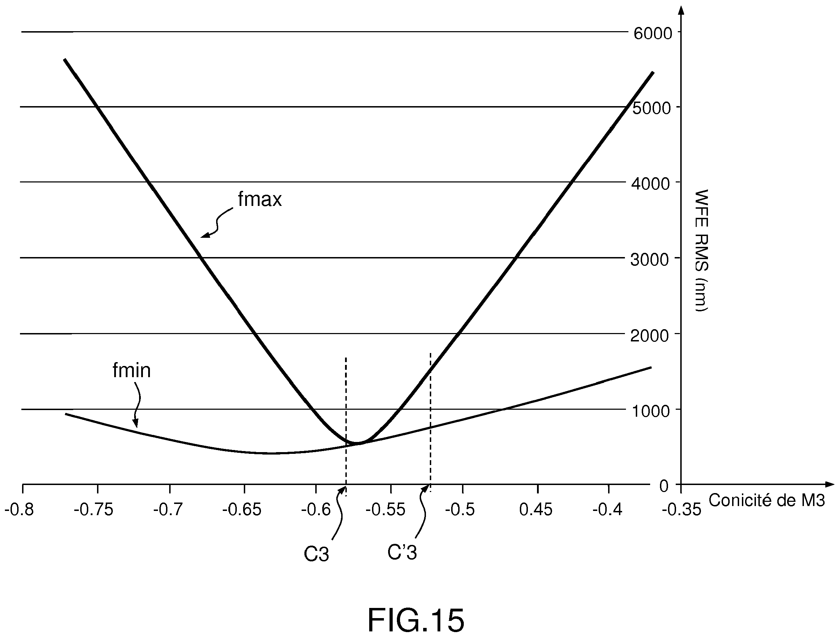

La figure 15 illustre l'évolution de l valeur quadratique moyenne de l'erreur de forme d'onde WFE RMS en fonction de la valeur de conicité u M3.

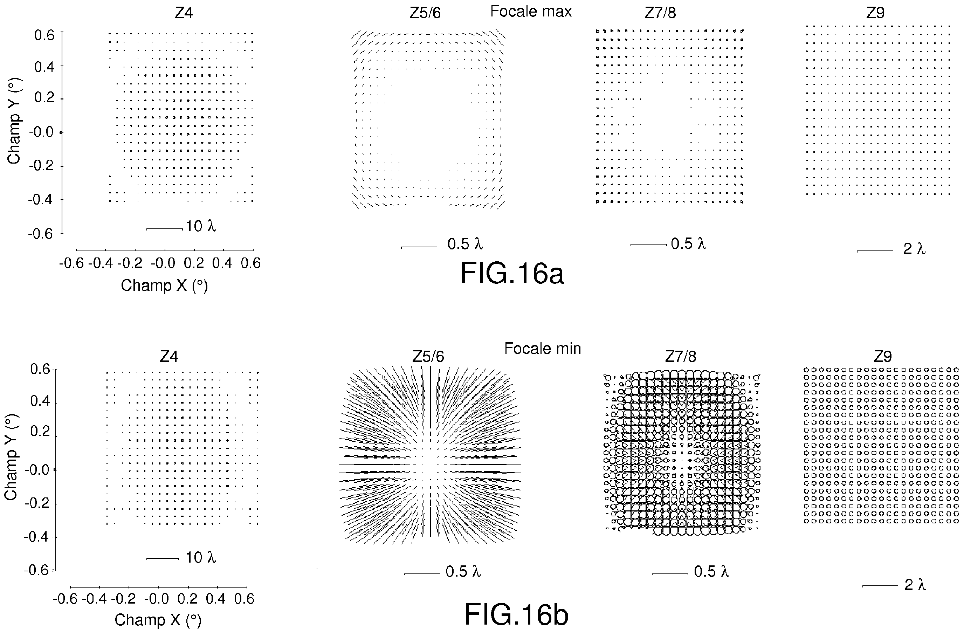

La figure 16 illustre les différentes aberrations dans le premier plan focal d'un télescope selon l'invention, le télescope présentant une nouvelle conicité c'3 du miroir M3, et pour le miroir déformable, une positon médiane Pm et des valeurs de $Z9_{MD}$ et de $Z4_{MD}$ ($Z9_{MD/max}$ et $Z9_{MD/min}$; $Z4_{MD/max}$ et $Z4_{MD/min}$) optimisées. La figure 16a illustre les différentes aberrations pour la focale max et la figure 16b pour la focale min.

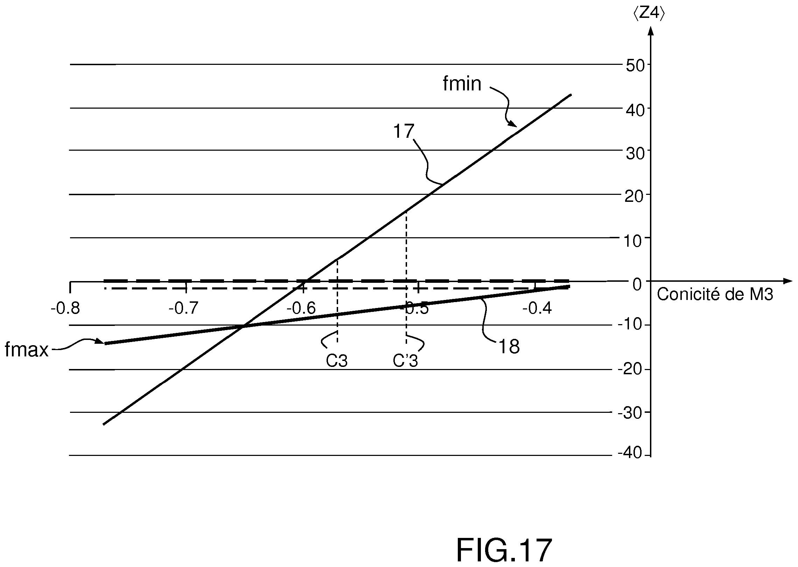

La figure 17 décrit la variation du focus moyen <Z4> du télescope à 3 Miroirs sans composant asphérique en fonction de la valeur de la conique de M3.

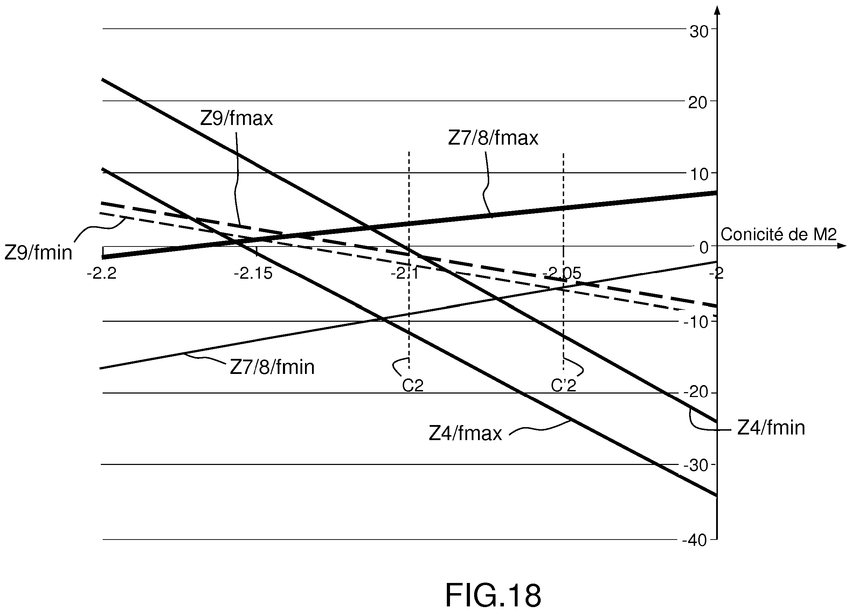

La figure 18 illustre l'évolution des principales aberrations en fonction de la valeur de la conicité de M2, pour les focales min et max.

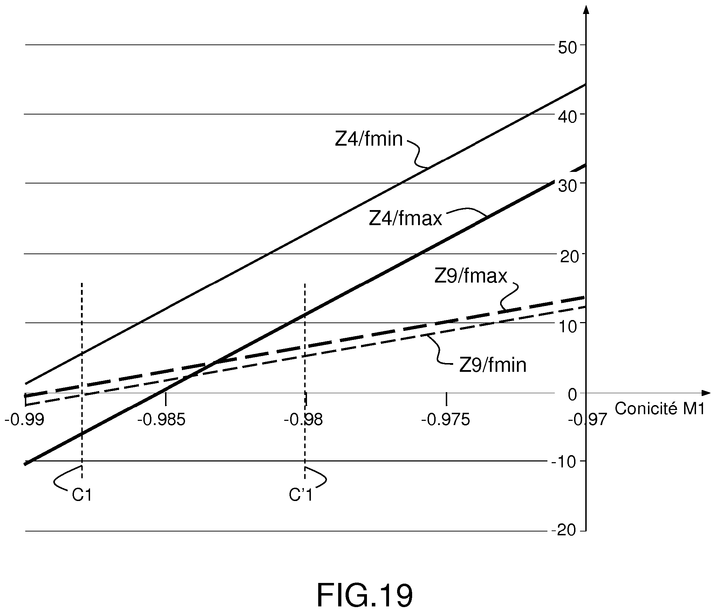

La figure 19 illustre l'évolution des principales aberrations en fonction de la valeur de la conicité de M1 pour les focales min et max.

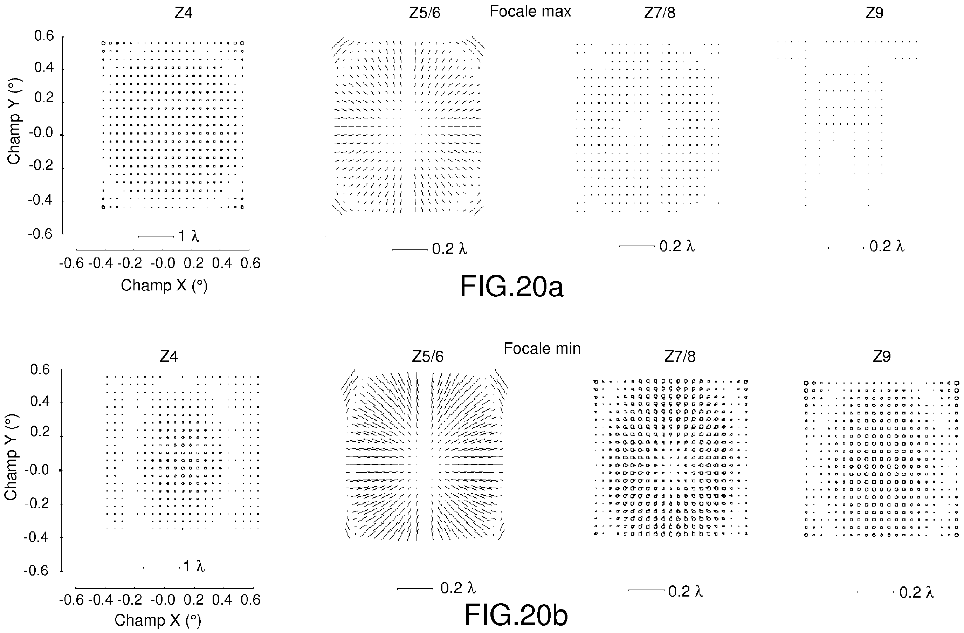

La figure 20 illustre les différentes aberrations dans le premier plan focal d'un télescope selon l'invention, le télescope présentant de nouvelles conicités c'1, c'2 et c'3 respectivement des miroirs M1, M2 et M3, et pour les composants asphériques de type miroir, une positon identique Pm et des valeurs de $Z9_{MD}$, de $Z4_{MD}$ et de $Z16_{MD}$ optimisées. La figure 20a illustre les différentes aberrations pour la focale max et la figure 20b pour la focale min.

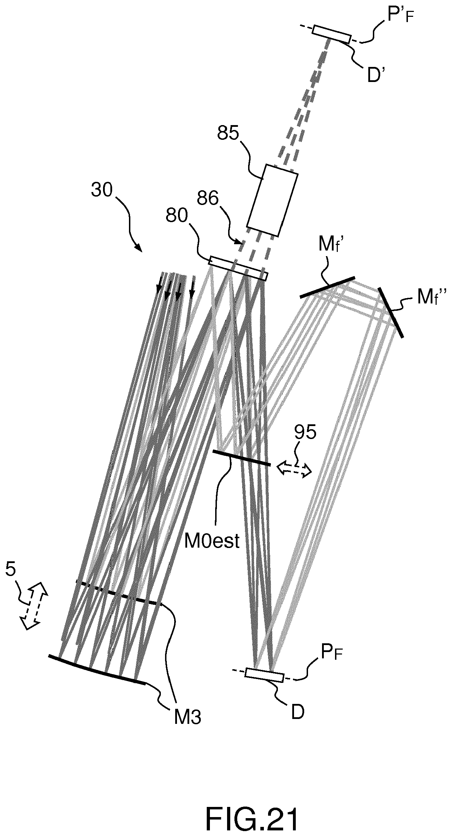

La figure 21 illustre un mode de réalisation multivoie du télescope selon l'invention.

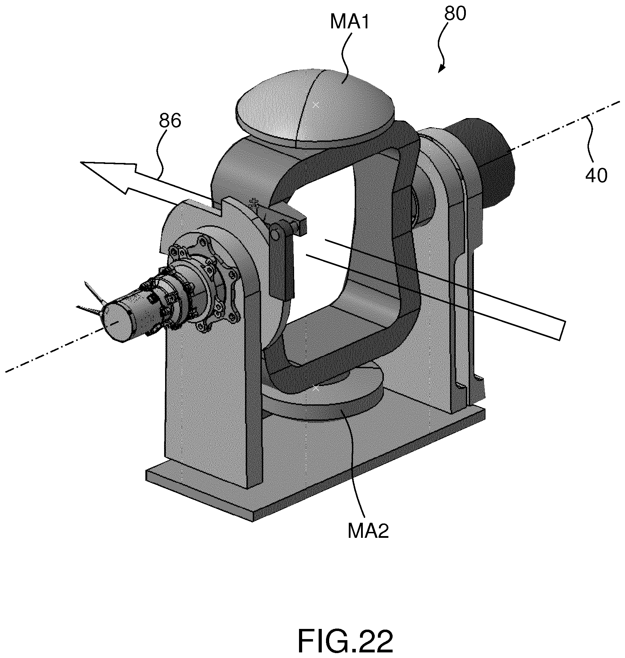

La figure 22 illustre un support de miroirs asphérique adapté au mode de réalisation multivoie.

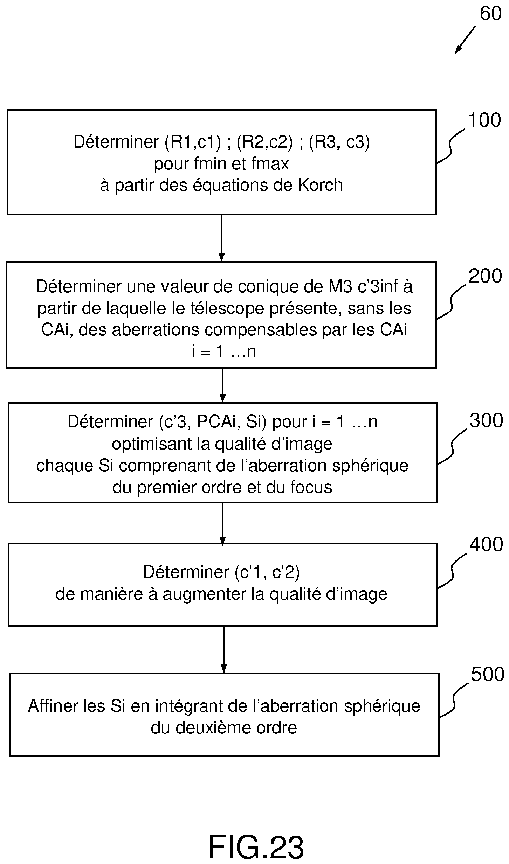

La figure 23 illustre le procédé de détermination de paramètres d'un télescope anastigmat selon l'invention

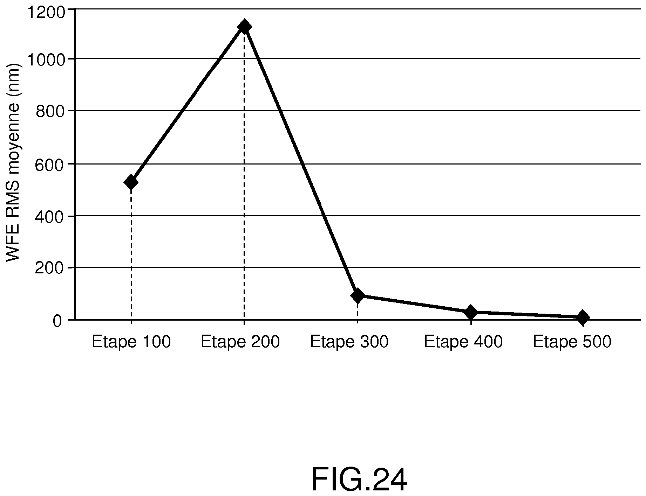

La figure 24 illustre l'évolution de la WFE moyennées sur les différentes focales, après chaque étape du procédé.

## DESCRIPTION DETAILLEE DE L'INVENTION

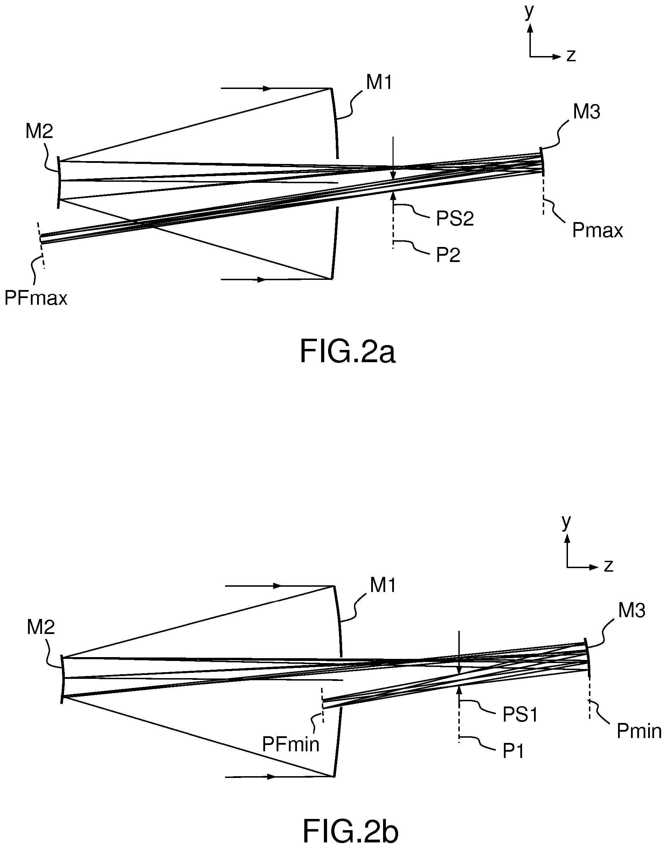

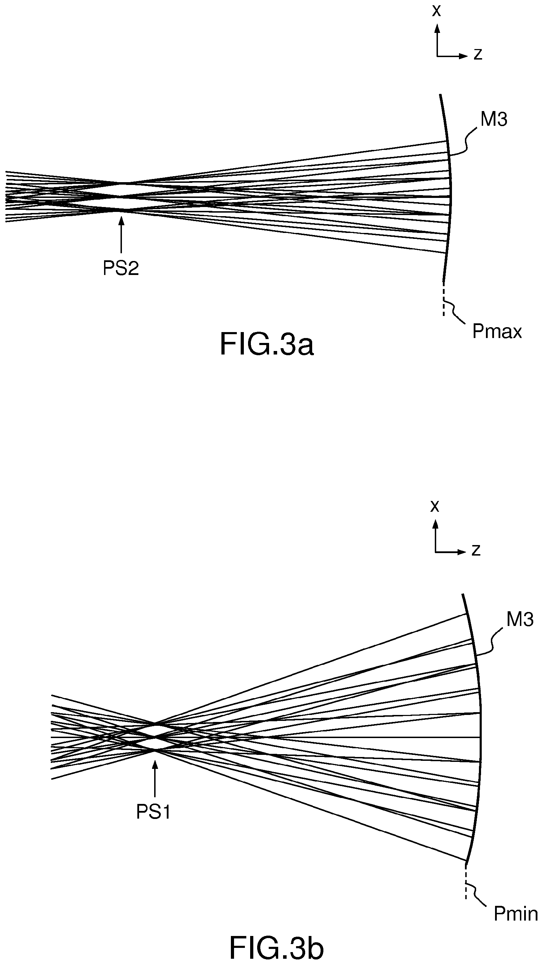

Nous allons tout d'abord décrire un télescope de type Korsch rendu multifocale. Les figures 2 et 3 décrivent un télescope 20 de type Korsch à 3 miroirs multifocal, la focale étant rendue variable par déplacement du troisième miroir M3 sur l'axe optique du télescope O à l'aide de moyens 5 de déplacement linéaire. Le document US 4993818 décrit sommairement le principe d'un tel système. Un télescope de ce type est utilisable dans un environnement spatial, mais aussi au sol pour effectuer de l'observation ou de la surveillance.

Le déplacement du miroir M3 entre deux positions extrêmes Pmin et Pmax permet de réaliser une focale variable entre respectivement une focale minimale fmin et une focale maximale fmax. L'instrument comprend au moins deux focales fmin et fmax et est susceptible de fonctionner pour des focales intermédiaires, par déplacement du miroir M3.

La figure 2 illustre le télescope vu de côté dans un plan YZ, la figure 2a illustre le télescope fonctionnant avec la focale maximale et la figure 2b avec la focale minimale. La figure 3 illustre le télescope vu de côté dans un plan XZ, la figure 3a illustre le télescope fonctionnant avec la focale maximale et la figure 3b avec la focale minimale.

Pour M3 à une des positions extrêmes Pmin, le télescope présente la focale minimum fmin, une première pupille de sortie PS1 à une première position P1 et un plan focal PFmin (figures 2b, 3b). Pour M3 à l'autre position extrême Pmax, le télescope présente la focale maximum fmax, une deuxième pupille de sortie PS2 à une deuxième position P2 et un plan focal PFmax (figures 2a, 3a).

La positon du plan focal du télescope variant avec la focale, il convient d'intégrer des moyens de variation du chemin optique entre le troisième miroir M3 et le détecteur D configurés de sorte que le détecteur reste positionné dans le plan focal du télescope. Ces moyens sont décrits ci dessous pour le cas d'un télescope multifocal 20 standard, et seront appliqués plus loin à un télescope selon l'invention.

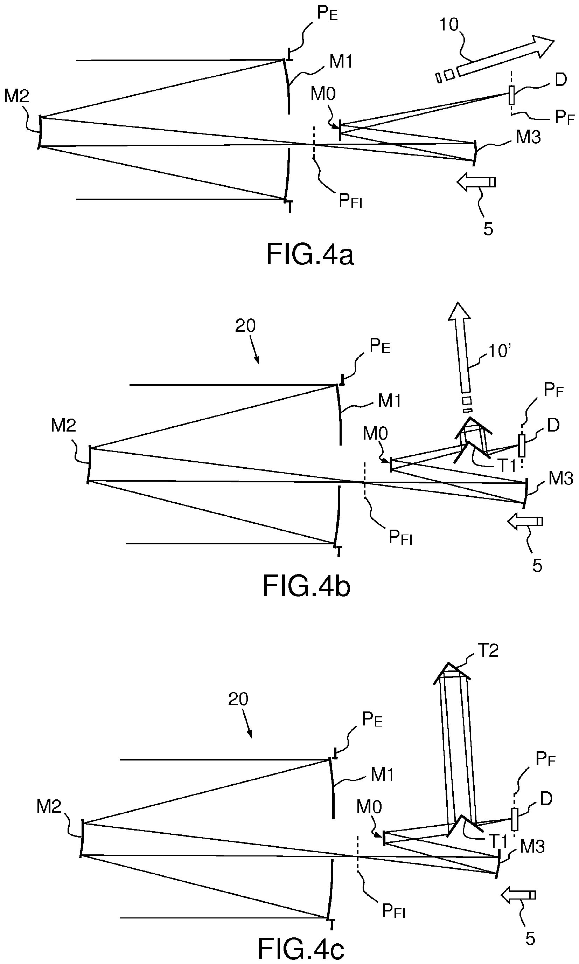

Selon une première variante les moyens de variation du chemin optique entre le troisième miroir M3 et le détecteur D comportent des moyens de translation 10 du détecteur D selon l'axe optique O, tels qu'illustré figure 4a. Un miroir plan M0 permet de replier le faisceau pour une meilleure compacité du système optique global et/ou pour résoudre une problématique d'encombrement.

Selon une deuxième variante illustrée figures 4b et 4c le détecteur D est fixe et les moyens de variation du chemin optique comprennent deux miroirs T1, T2 en forme de toit (c'est-à-dire présentant deux faces à environ 90° l'une de l'autre) situés entre le troisième miroir M3 et le détecteur D, et des moyens 10' de translation linéaire d'un des deux miroirs en forme de toit, T2 sur l'exemple, l'autre restant fixe, selon un axe non parallèle à l'axe optique, de manière à faire varier le chemin optique. Les pentes de T1 de préférence à 45° ne sont pas nécessairement parallèles à celles de T2. La figure 4b illustre une première positon du miroir en toit T2 correspondant à une première positon du miroir M3 (focale courte), et la figure 4c illustre une deuxième position du miroir en toit T2 correspondant à une deuxième positon du miroir M3 (focale plus longue). Un miroir plan M0 permet de replier le faisceau pour une meilleure compacité du système optique global et/ou pour résoudre une problématique d'encombrement.

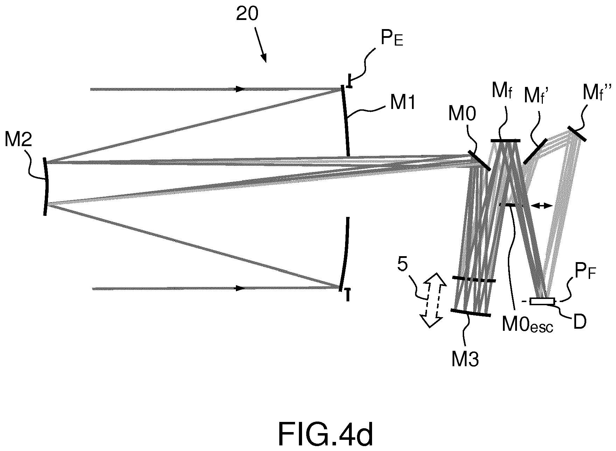

Une troisième variante illustrée figure 4d est particulièrement adaptée lorsque le télescope est bifocal, c'est-à-dire qu'il fonctionne pour deux focales uniquement, la focale fmin et la focale fmax. Le faisceau lumineux correspondant à un fonctionnement à fmin est en gris foncé, et le faisceau lumineux correspondant à un fonctionnement à fmax est en gris plus clair. Les moyens de variations du chemin optique comprennent des miroirs classiques fixes Mf, Mf' et Mf'' et au moins un miroir classique escamotable Mesc. Le miroir Mf est disposé sur les chemins optiques des deux faisceaux. Le miroir escamotable est escamoté lorsque le télescope fonctionne à fmin et est positionné dans le trajet optique du faisceau lorsque le télescope fonctionne à fmax. Les miroirs de repli Mf' et Mf'' positionnés dans le trajet optique du faisceau réfléchi par Mesc permettent d'obtenir un plan focal PFmax au même endroit que PFmin, ou on positionne le détecteur D.

Afin de bien comprendre le cheminement qui a conduit à l'invention, nous allons dans un premier temps décrire la manière de calculer un télescope de type Korsch à pluralité de focales fi, i indice de 1 à n. La focale fmin correspond à f1 et la focale fmax correspond à fn. Pour un télescope bifocal, n=2, fonctionnant uniquement à fmin =f1 et fmax=f2. On détermine des paramètres dénommés paramètres initiaux des premier, deuxième et troisième miroirs compatibles à la fois avec la focale minimale fmin et la focale maximale fmax, avec un logiciel optique d'optimisation connu de l'état de la technique.

Ainsi à l'aide des équations de Korsch, on détermine les rayons de courbures et des coniques initiales pour les deux focales extrêmes de notre zoom.

Par exemple, il est possible de répondre aux équations de Korsch simultanément pour les deux focales fmin et fmax en ayant un rayon de courbure M1 identiques pour les 2 focales.

Le point de départ est donc constitué par les valeurs: R1, R2_fmax, R2_fmin, R3_fmax, R3_fmin, C1_fmax, C1_fmin, C2_fmax, C2_fmin, C3_fmax, C3_fmin.

La suite de l'optimisation consiste à contraindre les rayons de courbures et les conicités à être identiques pour les 2 focales extrêmes fmin et fmax.

L'optimisation est réalisée de manière classique à l'aide de logiciels de calcul optique (CodeV, Zemax, Oslo,...). Ces logiciels fonctionnent sur le principe de la minimisation d'une fonction d'erreur. Typiquement la fonction d'erreur inclut la qualité image au plan focal et la contrainte des focales fmin et fmax.

Ainsi, avec une première optimisation de la qualité d'image dans le plan focal du télescope selon un critère prédéterminé, on aboutit aux paramètres initiaux :

Rayons de courbure initiaux : R1, R2, R3 pour respectivement M1, M2 et M3 Coniques initiales : C1, C2, C3 pour respectivement M1, M2 et M3.

Le critère prédéterminé consiste par exemple à minimiser d'une erreur de forme d'onde ou WFE pour « Wave Front Error » en anglais, moyennée sur une pluralité de points du champ, bien connu de l'homme de l'art. Typiquement on cherche à minimiser la valeur quadratique moyenne ou WFE RMS.

Dans ce type de solution les formes des miroirs M1, M2 et M3, caractérisées par les paramètres rayon de courbure R et constante de conicité c (on choisi ici de ne pas prendre en considération les termes d'ordres supérieurs qui n'apportent pas d'amélioration), répondent aux équations établies par M. Korsch afin d'obtenir une solution aplanétique et anastigmate, sans courbure de champ. Cependant ces équations ne peuvent pas être rigoureusement résolues simultanément pour les deux focales fmin et fmax.

Il s'agit d'un compromis et la qualité image s'en ressent. La qualité image reste acceptable pour des télescopes peu contraints en volume (c'est-à-dire pour lesquels les rayons sont incidents sur les miroirs avec des angles faibles). Dans le domaine spatial, la contrainte de volume est primordiale. Cette solution n'est donc pas envisageable pour des instruments spatiaux de focale et de taille de pupille importantes dans lesquels les rayons sont incidents sur les miroirs avec des angles élevés.

Un exemple illustratif est un télescope bifocal avec :

Focale max = 37.5 m
Focale min : 15 m
Ratio du zoom : 2.5
Diamètre du miroir M1 : 1.1 m
Distance entre M1 et M2 : 1600 mm
Distances entre les deux positons extrêmes de M3 : 250 mm
Distances entre PS1 et PS2 : 250 mm
Distance entre PFmax et PFmin : 1600 mm (PF : plan focal).

L'étape de détermination des paramètres initiaux par une première optimisation telle que décrite ci-dessus aboutit à une configuration initiale du télescope aux valeurs suivantes :

R1 = 4000 mm c1 = -1
R2 = 1000 mm c2 =-2.1
R3 = 1200 mm c3=-0.61

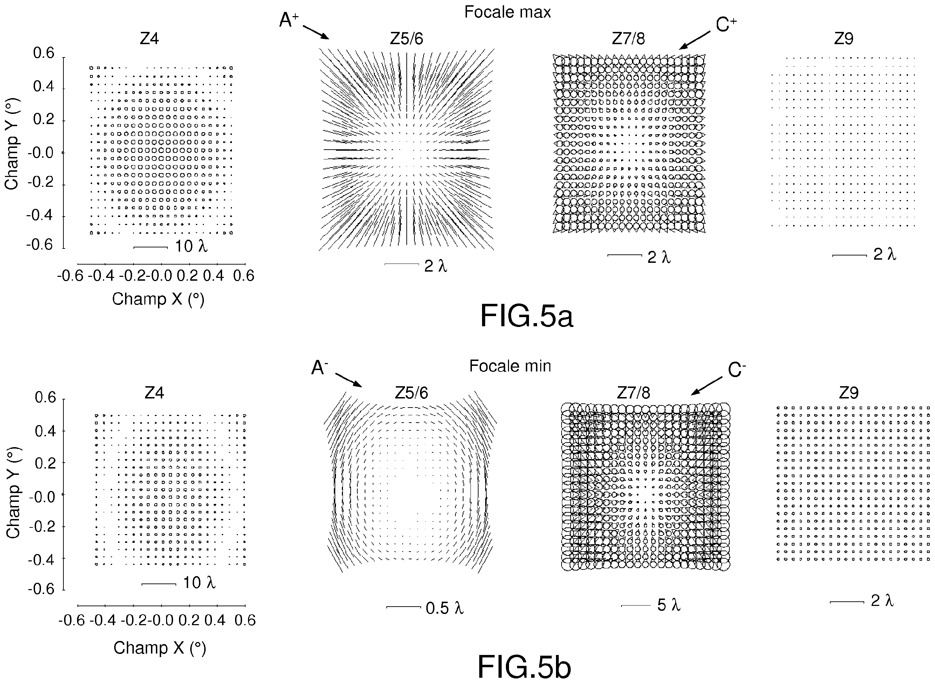

La figure 5 illustre les aberrations présentes dans le plan focal $P_F$ (positon du détecteur) pour le télescope bifocal dont les trois miroirs asphériques M1, M2 et M3 ont les paramètres initiaux obtenus en résolvant les équations de Korsch tel qu'expliqué ci-dessus.

La figure 5a illustre les aberrations pour la focale maximale fmax, et la figure 5b pour la focale minimale fmin.

Pour rappel le focus correspond à Z4, l'astigmatisme à Z5 et Z6 (Z5/6), la coma à Z7 et Z8 (Z7/8) et l'aberration sphérique (du premier ordre) à Z9.

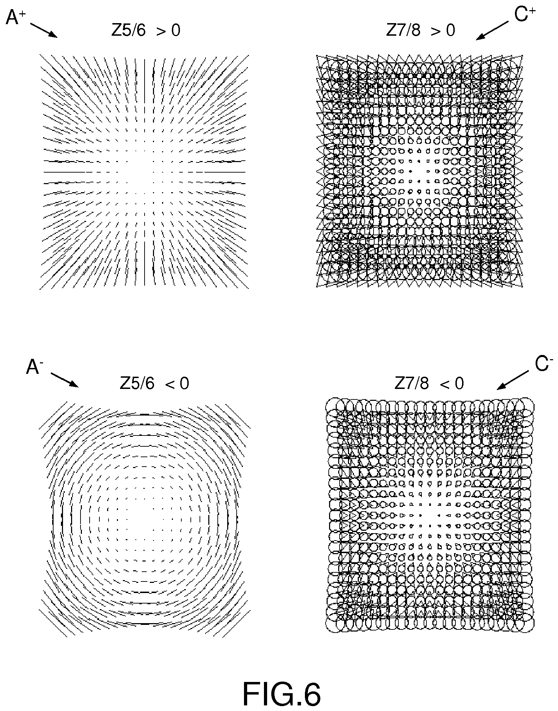

Afin de caractériser plus précisément les différentes catégories d'aberrations étudiées nous adopterons une convention de signe illustrée figure 6.

Nous dénommerons :

- astigmatisme « radial »: astigmatisme pour lequel le foyer tangentiel se situe avant le foyer sagittal. Dans la suite cet astigmatisme sera considéré par convention comme positif et noté A$^+$;
- astigmatisme « tangentiel »: astigmatisme pour lequel le foyer sagittal se situe avant le foyer tangentiel. Dans la suite cet astigmatisme sera considéré par convention comme négatif et noté A$^-$.
- coma « externe »: coma pour laquelle la forme de la tache image d'un point source est une « comète » dont la queue (partie la plus large) s'éloigne de l'axe optique. Il s'agit de la coma créée par une lentille bifocale. Dans la suite cette coma sera considéré par convention comme positive, et noté C$^+$ ;
- coma « interne »: coma pour laquelle la forme de la tache image d'un point source est une « comète » dont la queue est dirigée vers l'axe optique. Dans la suite cette coma sera considéré par convention comme négative et noté C$^-$

On constate sur la figure 5 que ces aberrations, à l'exception de l'aberration sphérique Z9, sont variables dans le champ (X, Y) du télescope. Les aberrations dominantes pour cette configuration initiale du télescope sont :
Aberrations dominantes initiales pour la focale maximale (figure 5a):

Astigmatisme (Z5/6) >0 noté A$^+$, et Coma (Z7/8) >0 noté C$^+$
Aberrations dominantes initiales pour a focale minimale (figure 5b):
Astigmatisme (Z5/6) <0 noté A$^-$ et Coma (Z7/8) <0 noté C$^-$
Le télescope en l'état ne peut être utilisé du fait des aberrations trop importantes.

Le télescope de type Korsh 30 selon l'invention, illustré figure 7, est basé sur un télescope 20 tel qu'illustré figures 2 à 4 comprenant les trois miroirs M1, M2 et M3 tels que décrits précédemment, et un premier détecteur D placé dans un premier plan focal $P_F$ (on dénomme D et $P_F$ respectivement premier détecteur et premier plan focal car un deuxième détecteur et un deuxième plan focal seront introduit plus loin dans une variante de l'invention).

Le télescope 30 selon l'invention comprend en outre une pluralité de composants optiques asphériques CAi, i indice comprise entre 1 et n, associés respectivement à la pluralité de focales fi, et disposés respectivement à une pluralité de positions PCAi situées entre la première position P1 de la pupille de sortie PS1 et la deuxième position P2 de la pupille de sortie PS2. C'est entre ces deux positons que la taille des composants asphériques est minimisée. Ces composants asphériques ont pour rôle de compenser les aberrations du système, focale par focale, leur calcul est décrit plus loin.

Préférentiellement les positions respectives des composants asphériques sont séparées les une des autres de 50 mm au maximum, préférentiellement de 20 mm au maximum. Cela facilite les calculs d'optimisation décrits plus loin. Le télescope 30 peut comprendre une pluralité de n focales avec n>2, ou seulement deux focales fmin et fmax (télescope bifocal).

Le télescope 30 comprend en outre des moyens 50 de variation du chemin optique, disposés entre les composants asphériques CAi et le premier détecteur D, et configurés de sorte que le premier détecteur reste positionné dans le premier plan focal du télescope. Les moyens 50 sont typiquement les moyens 10 décrits figure 4a, ou l'ensemble [T1, T2, 10'] décrit figures 4b et 4c, ou un ensemble comprenant des miroirs fixes et au moins un miroir escamotable, comme par exemple l'ensemble [M0esc, Mf', Mf"] décrit figure 4d.

Chaque composant asphérique CAi est disposé sur un chemin optique d'un faisceau correspondant à la focale associée fi lorsque le télescope fonctionne à ladite focal associée fi, et en dehors du chemin optique associé à une autre focale lorsque le télescope fonctionne à cette autre focale. Ainsi un composant asphérique donné $CAi_0$ n'est « vu » (réfléchi ou traversé) par le faisceau lumineux traversant le télescope que lorsque le télescope fonctionne à la focale correspondante $fi_0$.

Pour obtenir cette propriété, selon un mode de réalisation préféré au moins un composant asphérique est escamotable, via un mécanisme adhoc, de manière à être disposé sur le chemin optique du faisceau correspondant à ladite focale associée lorsque le télescope fonctionne à cette focal associée, et en dehors du chemin optique associé à la focale de fonctionnement, lorsque le télescope fonctionne à l'une des autres focales.

Différentes combinaisons de composant asphériques CAi et de moyens 50 sont possibles pour obtenir la propriété précitée.

Selon une première variante les composants asphériques CAi sont tous des miroirs asphériques MAi escamotables, tel qu'illustré figure 8. Ils sont placés sur le chemin optique commun à toutes les focales, et positionné ou pas dans le trajet optique en fonction de la focale utilisée. Typiquement la solution la plus simple en termes de fabrication et réglage est que l'ensemble des miroirs escamotables soient montés sur un mécanisme de déplacement unique 80. Dans ce cas les positions des miroirs escamotables PCAi sont alors sensiblement identiques, à moins de 10 mm, voir 5mm d'écart.

Pour un nombre de focales au moins égal à 3, un exemple de mécanisme est une roue à barillet, tel qu'illustrée figure 8. Les moyens 50 pour permettre un positionnement du premier détecteur D dans le premier plan focal $P_F$ sont par exemple des miroirs en toit avec un mécanisme de translation 10' tel que décrit figures 4b et 4c.

Pour un télescope bifocal, on peut utiliser un mécanisme de translation 90 pour positionner MA1 ou MA2 dans le trajet des faisceaux optiques commun aux deux focales tel qu'illustré figure 9. Lorsque le télescope 30 fonctionne avec la focale longue fmax (gris foncé), on positionne le miroir escamotable M0esc dans le trajet optique, les miroirs fixes Mf' et Mf" renvoyant le faisceau sur le premier détecteur D, comme décrit figure 4d et figure 9. Lorsque le télescope fonctionne avec la focale fmin (gris clair), on escamote le miroir M0esc avec un mécanisme 95. On évite ainsi le mécanisme complexe de déplacement des miroirs en toit.

Pour un télescope bifocal à deux miroirs asphérique escamotables MA1 et MA2, on peut également utiliser un support 80 pour lequel la commutation d'un miroir asphérique à l'autre se fait par basculement autour d'un axe de rotation, mécanisme dénommé « flip/flop ».

Cette première variante de télescope 30 uniquement composée de miroirs présente l'avantage d'un fonctionnement indépendant de la longueur d'onde, les miroirs ne présentant pas de chromatisme. La bande spectrale de fonctionnement est alors déterminée par la nature du matériau réfléchissant des miroirs et la bande spectrale de sensibilité du premier détecteur.

Selon une deuxième variante, au moins un composant asphérique est une lame asphérique LA fonctionnant en transmission. Un exemple pour un télescope bifocal est illustré figure 10. Le miroir asphérique escamotable MA est positionné dans le trajet des faisceaux lorsque le télescope fonctionne à la focale fmax, et est escamoté (par un mécanisme 105) lorsque le télescope fonctionne à la focale fmin, la lame asphérique LA se retrouvant alors sur le trajet du faisceau. On supprime alors le mécanisme de déplacement 95.

Dans le cas d'un télescope 30 selon l'invention, la pupille de sortie n'est pas fixe suivant la focale du zoom. La pupille de sortie se déplace (ordre de grandeur ~200mm) suivant la focale choisie. Les miroirs asphériques CAi. travaillent donc dans le champ. Cela à un impact très important sur les aberrations apportées au système par les miroirs asphériques. Pour un miroir disposé en pupille de sortie, un faisceau correspondant à un point du champ éclaire ce miroir dans son intégralité, et donc le faisceau réfléchit va être impacté par de l'aberration sphérique si le miroir en question a de l'aberration sphérique.

Pour un miroir positionné hors pupille de sortie, chaque faisceau correspondant à un point du champ éclaire des zones différentes du miroir (et non pas l'intégralité). Les fronts d'ondes réfléchis par des zones différentes du miroir auront donc des aberrations différentes. Par exemple comme expliqué plus bas, l'introduction d'aberration sphérique sur les CAi dont la position ne coïncide pas avec la pupille de sortie, introduit dans le télescope de l'astigmatisme et de la coma dans des proportions beaucoup plus importantes que de l'aberration sphérique.

Etudions à présent quelles sont les aberrations susceptibles d'être corrigées par un composant asphérique placé dans la zone interpupille, c'est-à-dire entre PS1 et PS2, pour le télescope initial optimisé avec les équations de Korsh.

Pour la suite il convient de ne pas confondre les aberrations du télescope, correspondant aux défauts du télescope en tant que système optique, et les aberrations introduites dans la forme du composant asphérique, notées avec l'indice CA.

L'analyse qui suit utilise des composants asphériques de type miroirs à titre d'exemple, les calculs pouvant être facilement adaptés à l'utilisation d'au moins une lame au lieu d'un miroir.

La figure 11 illustre, pour le système initial, les aberrations résultantes suite à l'introduction d'aberration sphérique sur un composant asphérique $Z9_{CA}$ ($Z9_{CA}>0$ pour la figure 11a et $Z9_{CA}<0$ pour la figure 11b), en fonction de sa position relative par rapport à la pupille de sortie effective PS, lorsqu'il est situé en aval de PS par rapport au miroir M3.

La figure 12 illustre, pour le système initial, les aberrations résultantes suite à l'introduction d'aberration sphérique $Z9_{CA}$ sur un composant asphérique, avec $Z9_{CA}>0$ pour la figure 12a et $Z9_{CA}<0$ pour la figure 12b, en fonction de sa position relative par rapport à la pupille de sortie effective PS, lorsqu'il est situé en amont de PS par rapport au miroir M3.

Le composant asphérique étant disposé entre P1 et P2, il est situé selon la figure 11 pour la focale max (en aval de PS2 par rapport à M3) et selon la figure 12 pour la focale min (en amont de PS1 par rapport à M3).

On voit sur les figures 11 et 12 que l'introduction d'aberration sphérique $Z9_{CA}$ sur un composant asphérique CA introduit des aberrations telles que astigmatisme et coma dans le télescope. Ce qui signifie qu'un composant asphérique peut compenser les aberrations inverses de celles crées par $Z9_{CA}$.

On déduit de la figure 11 que pour la focale max fmax :

- introduire du $Z9_{CA}>0$ crée de l'astigmatisme <0 et de la coma <0, ce qui permet de corriger de l'astigmatisme >0 et de la coma >0
- introduire du $Z9_{CA}<0$ crée de l'astigmatisme >0 et de la coma >0, ce qui permet de corriger de l'astigmatisme <0 et de la coma <0

On déduit de la figure 12 que pour la focale min fmin :

- introduire du $Z9_{CA}>0$ crée de l'astigmatisme <0 et de la coma >0, ce qui permet de corriger de l'astigmatisme >0 et de la coma <0
- introduire du $Z9_{CA}<0$ crée de l'astigmatisme >0 et de la coma <0 ce qui permet de corriger de l'astigmatisme <0 et de la coma >0

Ainsi, en plaçant un composant asphérique par focale entre P1 et P2, du $Z9_{CA}$ d'un signe donné permet de corriger simultanément pour les deux focales extrêmes de l'astigmatisme d'un même signe donné et de la coma de signe opposé.

Par exemple $Z9_{CA}>0$ permet de corriger de l'$A^+$ et du $C^+$ pour fmax et de l'$A^+$ et du $C^-$ pour fmin.

Cette capacité de correction n'est pas compatible du système initial dont les aberrations à corriger sont illustrées figure 5. Ainsi en appliquant au télescope bifocal une méthode classique d'optimisation de ses paramètres à l'aide des équations de Korsch (configuration initiale du télescope 3 miroirs) et en tentant de compenser des aberrations à l'aide d'un composant asphérique, on arrive à une impasse : Un composants CA par focale placé dans la zone interpupille ne peut corriger simultanément l'astigmatisme et la coma présentes dans le système fonctionnant à la focale minimale et à la focale maximale

Après de nombreux calculs les inventeurs ont identifié une manière de réaliser un télescope de type Korsch à pluralité de focales présentant une très bonne qualité d'image.

Dans le télescope 30 selon l'invention, le troisième miroir M3 présente une nouvelle conicité c'3 déterminée à partir de la conicité initiale c3 (calculée à partir des équation de Korsch lors de la première optimisation tel qu'expliqué ci-dessus).

La nouvelle conicité c'3 est déterminée de sorte que le télescope anastigmat à trois miroirs asphériques présente, sans la présence d'un composant asphérique, et pour les focales minimale et maximale, des aberrations compensables par adjonction de ce composant asphérique.

Selon un mode de réalisation les aberrations compensables sont l'astigmatisme et la coma.Compte tenu de l'enseignement des figures 11 et 12, on cherche à obtenir une configuration du télescope M1/M2/M3 (sans CAi) présentant les aberrations compensables suivantes :

Pour la focale maximale : astigmatisme positif $A^+$ et coma positive $C^+$.
Pour la focale minimale : astigmatisme positif $A^+$ et coma négative $C^-$.

Sur la figure 5 on voit que l'astigmatisme pour la focale minimale est négative.
La nouvelle conicité c'3 est donc déterminée de manière à modifier le signe de l'astigmatisme de télescope sans la présence d'un composant asphérique, pour la focale minimale, c'est-à-dire de manière à transformer l'astigmatisme négatif du système en un astigmatisme positif pour la focale minimale.

La figure 13 décrit l'évolution de la valeur moyenne de l'astigmatisme du télescope à 3 miroirs (sans les CAi) <Z5/6> selon une unité arbitraire, pour la focale min (courbe 11) et la focale max (courbe 12), en fonction de la valeur de conicité du M3. On retrouve pour la conicité initiale c3= -0.61 un astigmatisme positif pour fmax et négatif pour fmin. Cette figure met en évidence l'existence d'une valeur de c'3inf pour laquelle le signe de l'astigmatisme pour la focale min s'inverse, ici c'3inf= -0.56. Pour une nouvelle conicité c'3 supérieure ou égale à c'3inf, l'astigmatisme de la focale min change de signe. La nouvelle valeur de c'3 ne peut en outre pas trop s'éloigner de la valeur initiale c3 afin de maintenir la convergence du système optique.

Une deuxième optimisation de la qualité d'image, à partir de la valeur c'3inf est alors effectuée, afin de déterminer la nouvelle conicité c'3, et chaque position PCAi des CAi, ainsi que chaque forme de la surface Si permettant d'obtenir la meilleure qualité d'image selon le critère prédéterminé.

Préférentiellement lorsque tous les composants asphériques sont des miroirs, on considère qu'ils sont positionnés au même endroit, c'est à dire que toutes les PCAi sont égales à une position unique Pm, ce qui simplifie l'optimisation. On calcule ensuite et S1 pour fmin et Sn pour fmax, et on déduit les Si intermédiaire à partir de S1 et S2.

Selon un autre mode de réalisation, on calcule d'abord PCA1 et S1 et PCAn et Sn, et on déduit PCAi et Si intermédiaires à partir de ces valeurs.

Avec la connaissance a priori des aberrations susceptibles d'être compensées par un composant asphérique, tel qu'illustré figures 11 et 12, on sait que la forme de la surface Si d'un CAi apte à compenser les aberrations du système optique de focale fi comprenant M1, M2, et M3 de conicité c'3, doit comprendre de l'aberration sphérique du premier ordre $Z9_{CA}$, et plus particulièrement du $Z9_{CA}$ positif.

Ainsi la valeur exacte de la nouvelle conicité c'3, les positons PCAi, le cas échéant la position médiane Pm des CAi, et les formes S1 pour fmin, Sn pour fmax, et Si pour fi, sont déterminées par une deuxième optimisation des trajets optiques dans l'instrument, de manière à corriger les aberrations du télescope 3 miroirs présentant une nouvelle conicité c'3 et à optimiser la qualité d'image dans le premier plan focal du télescope selon le critère prédéterminé, typiquement la minimisation d'une erreur de front d'onde WFE.

La modification de la conicité de M3 permet d'inverser le signe de l'astigmatisme de la focale min, et ainsi d'introduire dans le système optique des aberrations telles que les aberrations résultantes du système optique sont compensables par un composant asphérique positionné dans la zone interpupille.

La figure 14 illustre les différentes aberrations présentes dans le premier plan focal du télescope à 3 miroirs dont le M3 présente la nouvelle conicité c'3 = - 0.52
La nouvelle valeur c'3 de la conique de M3 permet d'obtenir de l'astigmatisme positif pour toutes les focales et des comas opposées pour les focales extrêmes.
Dans l'exemple la nouvelle conicité c'3 s'écarte d'environ 20% de la valeur de la conique initiale c3 (égale à -0.61).
Préférentiellement la nouvelle conicité c'3 s'écarte de la conicité initiale c3 de plus de 5% et de moins de 30 %.

La figure 15 illustre l'évolution de la valeur quadratique moyenne de l'erreur de forme d'onde WFE RMS en fonction de la valeur de conicité du M3, pour les focales min (courbe 15) et max (courbe 16). On constate que la conicité initiale c3 correspondait à la valeur optimisée de qualité d'image, une nouvelle valeur de conicité c'3 supérieure à -0.56 entrainant une augmentation de la WFE, c'est-à-dire une diminution de la qualité d'image. Le changement de valeur de la conique de M3 ne répond pas à un besoin de qualité d'image, mais permet d'obtenir des aberrations compensables par un CA. On s'éloigne de l'optimum de qualité d'image dans le but de permettre la correction des aberrations.

L'introduction d'aberration sphérique $Z9_{CA}$ au niveau de chaque composant asphérique CAi permet de réduire fortement le Z7/8 (coma) et. Z5/6 (astigmatisme) du système, mais ne réduit pas le focus Z4. Au contraire, $Z9_{CA}$ va également entraîner une augmentation du Z4 du télescope comme illustré figure 17, qui décrit la variation du focus moyen <Z4> du système (télescope 3 Miroirs sans CAi) en fonction de la valeur de la conique de M3, pour la focale min (courbe 17) et la focale max (courbe 18) : on constate que le focus Z4 augmente sensiblement, particulièrement pour la focale min.
Il convient d'introduire du focus $Z4_{CA}$ dans le forme de chaque CAi pour compenser le Z4 du système (celui initialement présent et celui introduit par $Z9_{CA}$).

L'introduction de $Z4_{CA}$ permet également d'équilibrer les valeurs d'astigmatisme et de coma, c'est-à-dire de rendre proches les valeurs des coefficients respectifs, ce qui permet d'améliorer la compensation par le $Z9_{CA}$.

A partir de la plage identifiée pour c'3, la détermination de la valeur finale de c'3, du $Z9_{CA}(i)$ et du $Z4_{CA(i)}$ pour S1, Sn et tous les Si intermédiaires, ainsi que les différentes positions (ou la position unique Pm) des CAi s'effectue par une deuxième optimisation.

La figure 16 illustre les différentes aberrations dans le premier plan focal d'un télescope 30 selon l'invention, le télescope présentant une nouvelle conicité c'3 du miroir M3, et des CAi présentant une positon médiane Pm unique et des valeurs de $Z9_{CA}(1)$, $Z9_{CA}(n)$, et de $Z4_{CA}(1)$, $Z4_{CA}(n)$ (soit $Z9_{CA/max}$ et $Z9_{CA/min}$ ; $Z4_{CA/max}$ et $Z4_{CA/min}$) optimisées. La figure 16a illustre les différentes aberrations pour la focale max et la figure 16b pour la focale min.

La forme de la surface pour la focale max Sn comprend donc du $Z9_{CA}(n)$ et du $Z4_{CA}(n)$ La forme de la surface pour la focale min S1 comprend du $Z9_{CA}(1)$ et du $Z4_{CA}(1)$.

Dans l'exemple c'3 = -0.52, les CAi sont tous positionnés à 110 mm après la PS1 et à 140mm avant la PS2.

On constate en comparant cette figure 16 avec la figure 5 (voir le changement d'échelle), que la qualité du télescope est grandement améliorée.

Selon un mode de réalisation, pour améliorer encore la qualité d'image, on modifie légèrement la conicité des miroirs M2 et M1 du télescope 30 selon l'invention.

Dans l'exemple, la performance du télescope peut encore être améliorée, le Z7/8 et le Z9 étant compensé uniquement par le $Z9_{CA}$.

Modifier la conicité de M2 (nouvelle valeur c'2) permet justement de jouer sur ces deux aberrations. Cependant cette nouvelle conicité c'2 apporte également du Z4 en quantité importante. Cet excès de Z4 est contrebalancé par la modification de la conicité du M1 (nouvelle valeur c'1), qui joue également sur le Z9.

Ainsi une nouvelle conicité du premier miroir c'1 et une nouvelle conicité du deuxième miroir c'2 sont déterminées à partir respectivement d'une première conicité initiale c1 du premier miroir et d'une deuxième conicité initiale c2 du deuxième miroir, de manière à améliorer encore la qualité d'image du télescope selon le critère prédéterminé.

Pour l'exemple, ces modifications sont illustrées figures 18 et 19.

La figure 18 illustre l'évolution des principales aberrations en fonction de la valeur de la conicité de M2, pour les focales min et max, et la figure 19 l'évolution des principales aberrations en fonction de la valeur de la conicité de M1.

Par une troisième optimisation on détermine les nouvelles valeurs de conicité c'2 et c'1, illustrées figures 18 et 19 :

C'1 =-0.98
C'2 = -2.1

En les comparant aux valeurs initiales c1 = -1 et c2 = -2, on constate que ces variation de conicité sont faibles (moins de 10%, voir moins de 5% pour c1), mais permettent néanmoins d'améliorer encore la qualité d'image.

En variante, on ajoute également du $Z16_{CA}$ soit de l'aberration sphérique du deuxième ordre, qui influence Z16, Z9, Z4 Z5/6 et Z7/8 et permet d'augmenter encore la qualité d'image.

La figure 20 illustre les différentes aberrations dans le premier plan focal d'un télescope 30 selon l'invention, le télescope présentant de nouvelles conicités c'1, c'2 et c'3 respectivement des miroirs M1, M2 et M3, et pour CA1 et CAn, une position médiane Pm et des valeurs de $Z9_{CA}$, de $Z4_{CA}$ et de $Z16_{CA}$ optimisées. La figure 20a illustre les différentes aberrations pour la focale max et la figure 20b pour la focale min.

Pour rappel on a c'3 = -0.52, c'1 = -0.98 et c'2 = -2.1 .

La table 2 ci-dessous illustre les valeurs des paramètres (R, k ,A, B) ainsi que les coefficients de Zernicke Z4, Z9 et Z16 équivalents permettant de caractériser la surface Sn du miroir asphérique MAn correspondant à fmax = 37.5m.

Table 2

|   |   |   |   |   |
|---|---|---|---|---|
|   |   |   | Z4 | -2.89E-02 mm |
|   |   |   | Z5 | 0 |
|   |   |   | Z6 | 0 |
| R | -34500 | | Z7 | 0 |
| k | 0 | = | Z8 | 0 |
| A | -3.43E-10 | | Z9 | -7.21E-04 |
| B | 4.27E-15 | | Z10 | 0 |
|   |   |   | Z11 | 0 |
|   |   |   | Z12 | 0 |
|   |   |   | Z13 | 0 |

(suite)

| | |
|---|---|
| Z14 | 0 |
| Z15 | 0 |
| Z16 | 1.06E-05 |

La table 3 ci-dessous illustre les valeurs des paramètres (R, k ,A, B) ainsi que les coefficients de Zernicke Z4, Z9 et Z16 équivalents permettant de caractériser la surface S1 du miroir asphérique MA1 correspondant à fmin = 15m.

Table 3

| | | | | |
|---|---|---|---|---|
| | | | Z4 | -2.72E-02 |
| | | | Z5 | 0 |
| | | | Z6 | 0 |
| R | -46500 | | Z7 | 0 |
| k | 0 | = | Z8 | 0 |
| A | -5.40E-10 | | Z9 | -1.31E-03 |
| B | 1.67E-14 | | Z10 | 0 |
| | | | Z11 | 0 |
| | | | Z12 | 0 |
| | | | Z13 | 0 |
| | | | Z14 | 0 |
| | | | Z15 | 0 |
| | | | Z16 | 6.50E-05 |

L'optimisation de chaque surface peut être réalisée sur les paramètres (R, k ,A, B) ou sur les coefficients de Zernicke Z4, Z9, Z16 équivalents, en fonction de l'option choisie du logiciel utilisé.

On peut également développer l'optimisation plus loin dans les ordres supérieurs en affinant la surface par des paramètres C, D ...ou leur équivalent en coefficients de Zernicke.

On constate en comparant la figure 20 avec la figure 16 (voir changement d'échelle), que la qualité du télescope est encore améliorée. La qualité d'image finale obtenue est compatible avec la contrainte d'une WFE RMS <$\lambda$/15, qui pour le visible correspond à une WFE RMS < 50 nm. (voir plus loin figure 22).

Dans le télescope 30 selon l'invention les composants asphériques CAi font partie intégrante de la combinaison optique de l'instrument.

Préférentiellement, lorsque le télescope selon l'invention présente une pluralité de focales intermédiaires avec n>2, la forme Si de chaque CAi associé aux focales intermédiaires est calculée à partir de la forme de la surface pour les valeurs de focale minimale S1 et maximale Sn, afin d'appliquer la correction adéquate pour chaque focale ;

Ainsi, une fois les aberrations $Z9_{CA}$, de $Z4_{CA}$ et de $Z16_{CA}$ optimisées pour fmin et fmax, c'est-à-dire des valeurs de coefficients des polynômes de Fringe Zernike déterminés pour fmin et fmax, on calcule les valeurs des coefficients de polynômes pour chaque valeur de focale intermédiaire, à partir des valeurs de coefficients des polynômes de Fringe Zernike déterminés pour fmin et fmax.

Selon un mode de réalisation, le télescope 30 selon l'invention présente une voie additionnelle fonctionnant dans une plage de longueur d'onde différente de la plage de fonctionnement de la voie principale du télescope, dont un exemple d'architecture est illustré figure 21.

La voie principale fonctionne sur une première plage de longueur d'onde SB1, typiquement le visible entre 400 et 800 nm, et le premier détecteur D présente une sensibilité adaptée à SB1. La voie additionnelle fonctionne pour une deuxième bande spectrale SB2 différente de SB1, typiquement comprise dans la bande infrarouge.

Dans ce mode de réalisation les composants asphériques associés aux différentes focales sont préférentiellement des miroirs escamotables MAi montés sur un support unique 80. Ce support présente en outre une position neutre pour laquelle aucun miroir escamotable ne figure sur le chemin optique du faisceau optique incident sur le support (simple « trou sans fonction optique). Le faisceau passe alors au travers du support 80 selon un chemin optique secondaire 86.

Pour un télescope bifocal, un exemple de réalisation d'un tel support 80 trois positions est illustré figure 22. Il comprend trois positions, respectivement obtenue par pivotement autour d'un axe de rotation 40, les deux miroirs asphériques MA1 et MA2 étant montés autour d'une structure creuse. Dans une première position MA1 réfléchit le faisceau incident, dans une deuxième position c'est MA2 qui réfléchit le faisceau incident, et dans une troisième position neutre le faisceau incident passe au travers du support. D'autres design sont bien entendu possibles, comme une roue à barillets.

Ce télescope 30 multivoie comprend en outre un dispositif optique 85 disposé sur le chemin optique secondaire 86 et configuré pour générer un deuxième plan focal du télescope P'$_F$ correspondant à une focale choisie f'. Le dispositif optique 85 fonctionne préférentiellement en transmission, de manière à être compatible d'une valeur de focale choisie f' très inférieure à fmin, typiquement 10 fois plus faible. Le dispositif 85 est en outre configuré pour corriger les aberrations compensables du télescope et pour optimiser la qualité d'image dans le deuxième plan focal du télescope P'$_F$ selon le critère prédéterminé. Il rempli la même fonction compensatrice que les miroirs asphériques. Il s'agit typiquement d'un objectif dioptrique composé de plusieurs lentilles. Du fait de la souplesse de design, les lentilles peuvent être sphériques tout en réalisant la fonction de compensation. ?? autre précision à ajouter ?

Un deuxième détecteur D' est disposé dans le deuxième plan focal du télescope P'$_F$, et présente une sensibilité dans la deuxième bande spectrale SB2. Un filtre spectral est préférentiellement disposé sur le chemin optique secondaire, entre le support 80 et le deuxième détecteur D'pour sélectionner la bande spectrale SB2.

On réalise ainsi une voie additionnelle avec une complexification mécanique faible.

Un exemple de réalisation est un télescope présentant une voie principale bifocale dans le visible et une voie additionnelle infrarouge monofocale. Pour les optiques embarquées sur les satellites, on cherche à obtenir une voie infrarouge de moindre résolution que la voie visible, mais de plus grand champ, ce qui est obtenu avec une focale f' plus faible, typiquement d'un facteur 10, par rapport à fmin. Par exemple une focale dans le visible de l'ordre de la dizaine de mètres et une focale IR de l'ordre du mètre.

La position du miroir M3 pour le fonctionnement en infrarouge est préférentiellement (mais non nécessairement) égale à une des positions correspondant aux focales de la voie principale visible. Pour cette focale, une mesure simultanée visible / IR est possible.

Selon une variante, le télescope selon l'invention comporte un diaphragme d'ouverture placé dans la zone interpupille et réglable en ouverture pour garder une ouverture numérique sensiblement constante lorsque la focale varie.

Selon un autre aspect, l'invention concerne un procédé 60 de détermination de paramètres d'un télescope anastigmat illustré figure 23.

Le télescope comprend :

- trois miroirs asphériques, un premier miroir M1 concave, un second miroir M2 convexe, un troisième miroir M3 concave,
- un premier détecteur D,
- une pluralité de composants asphériques CAi (i indice de 1 à n) et,
- des moyens 5 de déplacement linéaire du troisième miroir sur l'axe optique O du télescope de manière à faire varier la focale du télescope selon une pluralité de focales fi (i indice de 1 à n) entre une focale minimale fmin et une focale maximale fmax.

Les trois miroirs M1, M2 et M3 sont agencés de sorte que le premier miroir et le second miroir forment d'un objet à l'infini une image intermédiaire située entre le second miroir et le troisième miroir, le troisième miroir formant de cette image intermédiaire une image finale dans le premier plan focal du télescope dans lequel est placé le premier détecteur D.

Les premier, deuxième et troisième miroirs sont de forme fixe caractérisée par au moins une conique et un rayon de courbure.

En outre le télescope à la focale minimale présente une première pupille de sortie PS1 à une première position P1, et le télescope à la focale maximale présente une deuxième pupille de sortie PS2 à une deuxième position P2. La pluralité de composants asphériques CAi est associée respectivement à la pluralité de focales fi, chaque composant asphérique étant disposé sur un chemin optique d'un faisceau correspondant à ladite focale associée lorsque le télescope fonctionne à ladite focal associée, et en dehors du chemin optique associé à une autre focale lorsque le télescope fonctionne à ladite autre focale.

Les composants asphériques sont disposés à respectivement une pluralité de positions PCAi situées entre la première et la deuxième position.

Le procédé 60 comprend une première étape 100 qui détermine des valeurs de coniques et des rayons de courbure, dénommés valeurs initiales, des premier, deuxième et troisième miroirs du télescope :

M1 (c1, R1) ; M2 (c2, R2), M3 (c3, R3).

Ces valeurs initiales sont compatibles à fois de la focale minimale fmin et de la focale maximale fmax, sans la présence des composants asphériques, et sont déterminées à partir des équations de Korsh, par une première optimisation de la qualité d'image dans le premier plan focal du télescope selon un critère prédéterminé.

Suivant une deuxième étape 200 on détermine une valeur de conicité du troisième miroir c'3inf, à partir de la conicité initiale c3 du troisième miroir, à partir de laquelle le télescope présente, sans la présence des composants asphériques et pour les focales minimale et maximale, des aberrations compensables par les composants asphériques CA1 et CAn respectivement associés aux focales fmin et fmax.

Puis dans une étape 300 on détermine une nouvelle valeur de conicité du troisième miroir c'3, la position PCAi

et la forme de la surface Si de chaque composant asphérique CAi par une deuxième optimisation, de manière à corriger les aberrations compensables et à optimiser la qualité d'image dans le premier plan focal du télescope selon le critère prédéterminé. La forme de chaque surface Si comprend au moins de l'aberration sphérique du premier ordre et du focus.

Préférentiellement le procédé 60 comprend en outre une étape 400 consistant à déterminer une nouvelle conicité du premier miroir c'1 et une nouvelle conicité c'2 du deuxième miroir M2, de manière à améliorer encore la qualité d'image selon le critère prédéterminé.

Préférentiellement le procédé 60 selon comprend également une étape 500 consistant à affiner la surface Si de chaque composant asphérique en intégrant en outre une aberration sphérique du deuxième ordre de manière à améliorer encore la qualité d'image selon le critère prédéterminé.

Typiquement le critère prédéterminé consiste à minimiser une erreur de forme d'onde WFE.

La figure 24 illustre l'évolution de la WFE RMS moyennée sur les différentes focales à la fin de chaque étape du procédé, soit en fonction des différentes modifications introduites dans le système optique, pour l'exemple du télescope donné ci-dessus.

La WFE obtenue après la première optimisation basée sur les équations de Korsch est de l'ordre de 560 nm, incompatible avec la contrainte WFE RMS < 50 nm. En modifiant la valeur de conicité de M3 pour modifier le signe de l'astigmatisme, la WFE est dégradée (pas encore de composant asphériques de compensation). Par contre, en introduisant pour chaque focale un composant asphérique dont la surface comprend de l'aberration sphérique du premier ordre et du focus, la WFE est grandement améliorée à une centaine de nm environ. La modification des conicités de M1 et M2 permet de diminuer la WFE en dessous de la cinquantaine de nm, et l'optimisation finale, introduisant de l'aberration sphérique du deuxième ordre, permet de la diminuer encore à une dizaine de nm.

**Revendications**

1. Télescope (30) anastigmat à trois miroirs asphériques comprenant au moins un premier miroir (M1) concave, un second miroir (M2) convexe un troisième miroir (M3) concave et un premier détecteur (D), et présentant un axe optique (O),

   - les trois miroirs étant agencés de sorte que le premier miroir (M1) et le second miroir (M2) forment d'un objet à l'infini une image intermédiaire située entre le second miroir et le troisième miroir, le troisième miroir (M3) formant de cette image intermédiaire une image finale dans un premier plan focal du télescope ($P_F$) dans lequel est placé le premier détecteur, les premier, deuxième et troisième miroirs étant de forme fixe **caractérisée par** au moins un rayon de courbure et une conicité,

   le télescope comprenant en outre :

   - des moyens (5) de déplacement linéaire du troisième miroir (M3) sur l'axe optique du télescope (O) de manière à faire varier la focale du télescope selon une pluralité de focales (fi) entre au moins une focale minimale (fmin) et une focale maximale (fmax),

   le télescope à la focale minimale présentant une première pupille de sortie (PS1) à une première position (P1), et le télescope à la focale maximale présentant une deuxième pupille de sortie (PS2) à une deuxième position (P2) **caractérisé en ce que** le télescope comprend en outre:

   - une pluralité de composants optiques asphériques (CAi) associés respectivement à la pluralité de focales (fi), disposés respectivement à une pluralité de positions (PCAi) situées entre la première et la deuxième position, chaque composant asphérique étant disposé sur un chemin optique d'un faisceau correspondant à ladite focale associée lorsque le télescope fonctionne à ladite focal associée, et en dehors du chemin optique associé à une autre focale lorsque le télescope fonctionne à ladite autre focale,
   - des moyens (50) de variation du chemin optique disposés entre les composants asphériques et le premier détecteur (D), et configurés de sorte que ledit premier détecteur reste positionné dans le premier plan focal du télescope,
   - le troisième miroir présentant une conicité (c'3) déterminée à partir d'une conicité initiale (c3),
   la conicité initiale (c3) étant déterminée à partir des équation de Korsch,
   la conicité (c'3) étant déterminée de sorte que le télescope présente, sans la présence desdits composants asphériques et pour les focales minimale et maximale, des aberrations d'astigmatisme et de coma compensables par lesdits composants asphériques,
   - la position (PCAi) et la forme de la surface (Si) de chaque composant asphérique étant déterminée de manière à corriger lesdites aberrations compensables dudit télescope pour la focal associée (fi) et à optimiser la qualité d'image dans le premier plan focal du télescope selon un critère prédéterminé, la forme de la surface (Si) de chaque composant asphérique comprenant au moins un premier et un deuxième type d'aberration, le premier type d'aberration étant l'aberration sphérique de premier ordre ($Z9_{CA}$) et le deuxième type d'aberration étant le focus ($Z4_{CA}$).

2. Télescope selon la revendication 1 dans lequel ladite forme de la surface de chaque composant asphérique comprend en outre une aberration sphérique de deuxième ordre ($Z16_{CA}$) pour améliorer encore la qualité d'image selon ledit critère.

3. Télescope selon l'une des revendications précédentes dans lequel la conicité (c'3) s'écarte de la conicité initiale de plus de 5% et de moins de 30 %

4. Télescope selon .l'une des revendications précédentes dans lequel une conicité du premier miroir (c'1) et une conicité du deuxième miroir (c'2) sont déterminées à partir respectivement d'une conicité initiale du premier miroir (c1) et d'une conicité initiale du deuxième miroir (c2),
les conicités initiales étant déterminées à partir des équation de Korsch,
les conicités étant déterminées de manière à améliorer encore la qualité d'image dudit télescope selon ledit critère.

5. Télescope selon l'une des revendications précédentes dans lequel on définit :

- un astigmatisme positif (A+) comme un astigmatisme pour lequel un foyer tangentiel se situe avant un foyer sagittal,
- un astigmatisme négatif (A-) comme un astigmatisme pour lequel un foyer sagittal se situe avant un foyer tangentiel,
- une coma positive comme une coma pour laquelle une forme de la tache image d'un point source est une « comète » dont la queue s'éloigne de l'axe optique et,
- une coma négative comme une coma pour laquelle une forme de la tache image d'un point source est une « comète » dont la queue est dirigée vers l'axe optique,

les aberrations compensables étant de l'astigmatisme positif (A+) et de la coma positive (C+) pour la focale maximale, de l'astigmatisme positif (A+) et de la coma négative (C-) pour la focale minimale.

6. Télescope selon l'une des revendications précédentes dans lequel on définit :

- un astigmatisme positif (A+) comme un astigmatisme pour lequel un foyer tangentiel se situe avant un foyer sagittal,
- un astigmatisme négatif (A-) comme un astigmatisme pour lequel un foyer sagittal se situe avant un foyer tangentiel,

et dans lequel la conicité du troisième miroir (c'3) est déterminée de manière à modifier le signe de l'astigmatisme du télescope pour la focale minimale, sans la présence de composant optique asphérique.

7. Télescope selon l'une des revendications précédentes pour lequel le critère prédéterminé consiste à minimiser une erreur de forme d'onde (WFE).

8. Télescope selon l'une des revendications précédentes pour lequel lesdites positions des composants asphériques sont séparées les une des autres de 50 mm au maximum.

9. Télescope selon l'une des revendications précédente dans lequel au moins un composant optique asphérique est escamotable de manière à être disposé sur le chemin optique du faisceau correspondant à la focale associée lorsque le télescope fonctionne à ladite focal associée, et en dehors des chemins optiques associés aux autres focales lorsque le télescope fonctionne à une de ces autres focales.

10. Télescope selon la revendication 9 dans lequel les composants optiques asphériques sont des miroirs escamotables (MAi).

11. Télescope selon la revendication 10 dans lequel les miroirs escamotables sont montés sur un support unique (80), les positions des miroirs escamotables étant alors sensiblement identiques.

12. Télescope selon la revendication 11 dans lequel lesdits composants asphériques sont des miroirs escamotables (MAi) montés sur un support unique (80), ledit support comprenant en outre une position pour laquelle aucun miroir escamotable ne figure sur le chemin optique du faisceau incident sur ledit support, le faisceau passant alors au travers du support selon un chemin optique secondaire (86), le télescope comprenant en outre :

- un dispositif optique (85) disposé sur le chemin optique secondaire, configuré pour générer un deuxième plan focal ($P'_F$) du télescope correspondant à une focale choisie (f), ledit dispositif optique (85) étant en outre configuré pour corriger lesdites aberrations compensables dudit télescope et pour optimiser la qualité d'image dans le deuxième plan focal du télescope ($P'_F$) selon ledit critère prédéterminé et,
- un deuxième détecteur (D') disposé dans le deuxième plan focal du télescope ($P'_F$), et sensible dans une deuxième bande spectrale (SB2) différente d'une première bande spectrale de sensibilité (SB1) du premier détecteur.

13. Télescope selon la revendication 12 dans lequel le dispositif optique (85) est adapté pour fonctionner en transmission dans la deuxième bande spectrale (SB2), dans lequel la première bande spectrale est comprise dans le visible et la deuxième bande spectrale est comprise dans l'infrarouge, et dans lequel la focale choisie (f') présente une valeur inférieure à la focale minimale.

14. Télescope selon l'une des revendications 1 à 9 dans lequel au moins un composant asphérique est une lame fonctionnant en transmission.

15. Télescope selon une des revendications précédentes comprenant uniquement deux focales, la focale minimale et la focale maximale.

16. Procédé (60) de détermination de paramètres d'un télescope anastigmat comprenant trois miroirs asphériques, un premier miroir (M1) concave, un second miroir (M2) convexe, un troisième miroir (M3) concave, un premier détecteur (D), une pluralité de composants asphériques (Can) et des moyens (5) de déplacement linéaire du troisième miroir sur un axe optique (O) du télescope de manière à faire varier la focale du télescope selon une pluralité de focales (fi) entre au moins une focale minimale (fmin) et une focale maximale (fmax),

les trois miroirs étant agencés de sorte que le premier miroir et le second miroir forment d'un objet à l'infini une image intermédiaire située entre le second miroir et le troisième miroir, le troisième miroir formant de cette image intermédiaire une image finale dans le premier plan focal du télescope dans lequel est placé le premier détecteur, les premier, deuxième et troisième miroirs étant de forme fixe **caractérisée par** au moins une conique et un rayon de courbure,

le télescope à la focale minimale présentant une première pupille de sortie (PS1) à une première position (P1), et le télescope à la focale maximale présentant une deuxième pupille de sortie (PS2) à une deuxième position (P2), la pluralité de composants asphériques (CAi) étant associés respectivement à la pluralité de focales (fi), chaque composant asphérique étant disposé sur un chemin optique d'un faisceau correspondant à ladite focale associée lorsque le télescope fonctionne à ladite focal associée, et en dehors du chemin optique associé à une autre focale lorsque le télescope fonctionne à ladite autre focale,

lesdits composants asphériques étant disposés à respectivement une pluralité de positions (PCAi) situées entre la première et la deuxième position,

le procédé comprenant les étapes consistant à :

- déterminer (100) des valeurs de coniques et des rayons de courbure dénommés valeurs initiales des premier (c1, R1), deuxième (c2, R2), et troisième (c3, R3) miroirs dudit télescope compatibles de la focale minimale (fmin) et de la focale maximale (fmax), sans la présence desdits composants asphériques, à partir des équations de Korsh, par une première optimisation de la qualité d'image dans le premier plan focal du télescope selon un critère prédéterminé,
- déterminer (200) une valeur de conicité du troisième miroir (c'3inf), à partir de la conicité initiale du troisième miroir (c3), à partir de laquelle le télescope présente, sans la présence desdits composants asphériques et pour les focales minimale et maximale, des aberrations compensables par les composants asphériques respectivement associés auxdites focales minimale et maximale, les aberrations compensables étant l'astigmatisme et la coma,
- déterminer (300) une nouvelle valeur de conicité du troisième miroir (c'3), la position (PCAi) et la forme de la surface (Si) de chaque composant asphérique par une deuxième optimisation, de manière à corriger lesdites aberrations compensables et à optimiser la qualité d'image dans le premier plan focal du télescope selon le critère prédéterminé,

la forme desdites surfaces des composants asphériques comprenant au moins de l'aberration sphérique de premier ordre ($Z9_{CA}$) et du focus ($Z4_{CA}$).

17. Procédé selon la revendication 16 comprenant en outre une étape consistant à déterminer (400) une nouvelle conicité du premier (c'1) et deuxième (c'2) miroirs de manière à améliorer encore la qualité d'image selon le critère prédéterminé.

18. Procédé selon la revendication 17 comprenant en outre une étape (500) consistant à affiner la détermination de la forme de la surface (Si) de chaque composant asphérique en intégrant en outre une aberration sphérique du deuxième ordre ($Z16_{CA}$) de manière à améliorer encore la qualité d'image selon le critère prédéterminé.

## Patentansprüche

1. Anastigmat-Teleskop (30) mit drei asphärischen Spiegeln, welches mindestens einen konkaven ersten Spiegel (M1), einen konvexen zweiten Spiegel (M2), einen konkaven dritten Spiegel (M3) und einen ersten Detektor (D) umfasst und eine optische Achse (O) aufweist,

- wobei die drei Spiegel so angeordnet sind, dass der erste Spiegel (M1) und der zweite Spiegel (M2) von einem Objekt bis ins Unendliche ein Zwischenbild bilden, welches zwischen dem zweiten Spiegel und dem dritten Spiegel befindlich ist, wobei der dritte Spiegel (M3) von diesem Zwischenbild ein endgültiges Bild in einer ersten Brennebene des Teleskops ($P_F$) bildet, in welcher der erste Detektor platziert ist, wobei der erste, der zweite und der dritte Spiegel eine fixe Form aufweisen, welche durch mindestens einen Krümmungsradius und eine Kegeligkeit gekennzeichnet ist,

wobei das Teleskop ferner Folgendes umfasst:

- Mittel (5) zur linearen Verschiebung des dritten Spiegels (M3) auf der optischen Achse des Teleskops (O), um die Brennweite des Teleskops gemäß einer Vielzahl von Brennweiten (fi) mindestens zwischen einer Mindest-Brennweite (fmin) und einer Höchst-Brennweite (fmax) zu variieren,

wobei das Teleskop bei der Mindest-Brennweite eine erste Ausgangspupille (PS1) an einer ersten Position (P1) aufweist, und das Teleskop bei der Hoechst-Brennweite eine zweite Ausgangspupille (PS2) an einer zweiten Position (P2) aufweist,
**dadurch gekennzeichnet, dass** das Teleskop ferner Folgendes umfasst:

- eine Vielzahl von asphärischen optischen Komponenten (CAi), welche jeweils mit der Vielzahl von Brennweiten (fi) assoziiert ist, welche jeweils an einer Vielzahl von Positionen (PCAi) angeordnet ist, welche zwischen der ersten und der zweiten Position befindlich ist, wobei jede asphärische Komponente in einem Strahlengang eines Strahls angeordnet ist, welcher der assoziierten Brennweite entspricht, wenn das Teleskop mit der assoziierten Brennweite arbeitet, und außerhalb des mit einer anderen Brennweite assoziierten Strahlengangs, wenn das Teleskop mit der anderen Brennweite arbeitet,
- Mittel (50) zur Variation des Strahlengangs, welche zwischen den asphärischen Komponenten und dem ersten Detektor (D) angeordnet und so konfiguriert sind, dass der erste Detektor in der ersten Brennebene des Teleskops positioniert bleibt,
- wobei der dritte Spiegel eine Kegeligkeit (c'3) aufweist, welche anhand einer Anfangskegeligkeit (c3) bestimmt wird,
wobei die Anfangskegeligkeit (c3) anhand der Korsch-Gleichungen bestimmt wird,
wobei die Kegeligkeit (c'3) so bestimmt wird, dass das Teleskop, ohne das Vorhandensein der asphärischen Komponenten und für die Mindest- und die Höchst-Brennweite durch die asphärischen Komponenten kompensierbare Astigmatismus- und Koma-Aberrationen aufweist,
- wobei die Position (PCAi) und die Form der Oberfläche (Si) jeder asphärischen Komponente so bestimmt wird, dass die kompensierbaren Aberrationen des Teleskops für die assoziierte Brennweite (fi) korrigiert werden, und dass die Bildqualität in der ersten Brennebene des Teleskops gemäß einem vorbestimmten Kriterium optimiert wird, wobei die Form der Oberfläche (Si) jeder asphärischen Komponente mindestens eine erste und eine zweite Art der Aberration umfasst, wobei die erste Aberrationsart die sphärische Aberration erster Ordnung ($Z9_{CA}$) und die zweite Aberrationsart der Fokus ($Z4_{CA}$) ist.

2. Teleskop nach Anspruch 1, wobei die Form der Oberfläche jeder asphärischen Komponente ferner eine sphärische Aberration zweiter Ordnung ($Z16_{CA}$) umfasst, um die Bildqualität gemäß dem Kriterium weiter zu verbessern.

3. Teleskop nach einem der vorhergehenden Ansprüche, wobei die Kegeligkeit (c'3) von der Anfangskegeligkeit um über 5 % und um unter 30 % abweicht.

4. Teleskop nach einem der vorhergehenden Ansprüche, wobei eine Kegeligkeit des ersten Spiegels (c'1) und eine Kegeligkeit des zweiten Spiegels (c'2) jeweils anhand einer Anfangsgkegeligkeit des ersten Spiegels (c1) und einer Anfangsgkegeligkeit des zweiten Spiegels (c2) bestimmt werden,
wobei die Anfangsgkegeligkeiten anhand der Korsch-Gleichungen bestimmt werden,
wobei die Kegeligkeiten so bestimmt werden, dass die Bildqualität des Teleskops gemäß dem Kriterium weiter verbessert wird.

5. Teleskop nach einem der vorhergehenden Ansprüche, wobei man Folgendes definiert:

   - einen positiven Astigmatismus (A+) als einen Astigmatismus, bei welchem sich ein tangentialer Brennpunkt vor einem sagittalen Brennpunkt befindet,
   - einen negativen Astigmatismus (A-) als einen Astigmatismus, bei welchem sich ein sagittaler Brennpunkt vor einem tangentialen Brennpunkt befindet,
   - eine positive Koma als eine Koma, bei welcher eine Form des Bildflecks eines Quellpunktes ein "Komet" ist, dessen Schweif sich von der optischen Achse entfernt, und
   - eine negative Koma als eine Koma, bei welcher eine Form des Bildflecks eines Quellpunktes ein "Komet" ist, dessen Schweif in Richtung der optischen Achse gerichtet ist,

   wobei die kompensierbaren Aberrationen positiver Astigmatismus (A+) und positive Koma (C+) bei der Höchst-Brennweite, und positiver Astigmatismus (A+) und negative Koma (C-) bei der Mindest-Brennweite sind.

6. Teleskop nach einem der vorhergehenden Ansprüche, wobei man Folgendes definiert:

   - einen positiven Astigmatismus (A+) als einen Astigmatismus, bei welchem sich ein tangentialer Brennpunkt vor einem sagittalen Brennpunkt befindet,
   - einen negativen Astigmatismus (A-) als einen Astigmatismus, bei welchem sich ein sagittaler Brennpunkt vor einem tangentialen Brennpunkt befindet,

   und wobei die Kegeligkeit des dritten Spiegels (c'3) so bestimmt wird, dass das Vorzeichen des Astigmatismus des Teleskops für die Mindest-Brennweite, ohne Vorhandensein einer asphärischen optischen Komponente, geändert wird.

7. Teleskop nach einem der vorhergehenden Ansprüche, wobei das vorbestimmte Kriterium darin besteht, einen Wellenformfehler (WFE) zu minimieren.

8. Teleskop nach einem der vorhergehenden Ansprüche, wobei die Positionen der asphärischen Komponenten um maximal 50 mm voneinander getrennt sind.

9. Teleskop nach einem der vorhergehenden Ansprüche, wobei mindestens eine asphärische optische Komponente in einer Weise abnehmbar ist, dass sie in dem Strahlengang des der assoziierten Brennweite entsprechenden Strahls angeordnet ist, wenn das Teleskop mit der assoziierten Brennweite arbeitet, und außerhalb der mit den anderen Brennweiten assoziierten Strahlengänge, wenn das Teleskop mit einer dieser anderen Brennweiten arbeitet.

10. Teleskop nach Anspruch 9, wobei die asphärischen optischen Komponenten abnehmbare Spiegel (MAi) sind.

11. Teleskop nach Anspruch 10, wobei die abnehmbaren Spiegel auf einer einzigen Halterung (80) montiert sind, wobei die Positionen der abnehmbaren Spiegel im Wesentlichen identisch sind.

12. Teleskop nach Anspruch 11, wobei die asphärischen optischen Komponenten abnehmbare Spiegel (MAi) sind, die auf einer einzigen Halterung (80) montiert sind, wobei die Halterung ferner eine Position umfasst, an welcher keiner der abnehmbaren Spiegel im Strahlengang des einfallenden Strahls auf der Halterung steht, wobei der Strahl dann durch die Halterung entsprechend eines zweiten Strahlengangs (86) passiert, wobei das Teleskop ferner Folgendes umfasst:

- eine optische Vorrichtung (85), welche in dem sekundären Strahlengang angeordnet ist, und welche konfiguriert ist, um eine zweite Brennebene ($P'_F$) des Teleskops zu erzeugen, welche einer gewählten Brennweite (f) entspricht, wobei die optische Vorrichtung (85) ferner konfiguriert ist, um die kompensierbaren Aberrationen des Teleskops zu korrigieren und um die Bildqualität in der zweiten Brennebene des Teleskops ($P'_F$) gemäß dem vorbestimmten Kriterium zu optimieren, und
- einen zweiten Detektor (D'), welcher in der zweiten Brennebene des Teleskops ($P'_F$) angeordnet und in einem zweiten Spektralband (SB2) empfindlich ist, welches sich von einem ersten Empfindlichkeits-Spektralband (SB1) des ersten Detektors unterscheidet.

13. Teleskop nach Anspruch 12, wobei die optische Vorrichtung (85) geeignet ist, um in Übertragung in dem zweiten Spektralband (SB2) zu arbeiten, wobei das erste Spektralband im sichtbaren Licht enthalten ist und das zweite Spektralband im Infrarot enthalten ist, und wobei die gewählte Brennweite (f) einen Wert aufweist, welcher die Mindest-Brennweite unterschreitet.

14. Teleskop nach einem der Ansprüche 1 bis 9, wobei mindestens eine asphärische Komponente eine in Übertragung arbeitende Platte ist.

15. Teleskop nach einem der vorhergehenden Ansprüche, welches nur zwei Brennweiten umfasst, die Mindest-Brennweite und die Höchst-Brennweite.

16. Verfahren (60) zur Bestimmung von Parametern eines Anastigmat-Teleskops, umfassend drei asphärische Spiegel, einen konkaven ersten Spiegel (M1), einen konvexen zweiten Spiegel (M2), einen konkaven dritten Spiegel (M3), einen ersten Detektor (D), eine Vielzahl von asphärischen Komponenten (Can) und Mittel (5) zur linearen Verschiebung des dritten Spiegels auf der optischen Achse (O) des Teleskops in einer Weise, dass die Brennweite des Teleskops gemäß einer Vielzahl von Brennweiten (fi) zwischen mindestens einer Mindest-Brennweite (fmin) und einer Höchst-Brennweite (fmax) variiert wird,
wobei die drei Spiegel so angeordnet sind, dass der erste Spiegel und der zweite Spiegel von einem Objekt bis ins Unendliche ein Zwischenbild bilden, welches zwischen dem zweiten Spiegel und dem dritten Spiegel befindlich ist, wobei der dritte Spiegel von diesem Zwischenbild ein endgültiges Bild in der ersten Brennebene des Teleskops bildet, in welcher der erste Detektor platziert ist, wobei der erste, der zweite und der dritte Spiegel eine fixe Form aufweisen, welche durch mindestens einen Kegelschnitt und einen Krümmungsradius gekennzeichnet ist,
wobei das Teleskop bei der Mindest-Brennweite eine erste Ausgangspupille (PS1) an einer ersten Position (P1) aufweist, und das Teleskop bei der Höchst-Brennweite eine zweite Ausgangspupille (PS2) an einer zweiten Position (P2) aufweist,
wobei die Vielzahl von asphärischen optischen Komponenten (CAi) jeweils mit der Vielzahl von Brennweiten (fi) assoziiert ist, wobei jede asphärische Komponente in einem Strahlengang eines Strahls angeordnet ist, welcher der assoziierten Brennweite entspricht, wenn das Teleskop mit der assoziierten Brennweite arbeitet, und außerhalb des mit einer anderen Brennweite assoziierten Strahlengangs, wenn das Teleskop mit der anderen Brennweite arbeitet,
wobei die asphärischen Komponenten jeweils an einer Vielzahl von Positionen (PCAi) angeordnet sind, welche zwischen der ersten und der zweiten Position befindlich ist,
wobei das Verfahren folgende Schritte umfasst:

- Bestimmen (100) von Werten der Kegelschnitte und der Krümmungsradien, genannt Anfangswerte des ersten (c1, R1), des zweiten (c2, R2) und des dritten (c3, R3) Spiegels des Teleskops, welche mit der Mindest-Brennweite (fmin) und der Höchst-Brennweite (fmax) kompatibel sind, ohne Vorhandensein der sphärischen Komponenten, anhand der Korsh-Gleichungen, durch eine erste Optimierung der Bildqualität in der ersten Brennebene des Teleskops gemäß einem vorbestimmten Kriterium,
- Bestimmen (200) eine Kegeligkeitswertes des dritten Spiegels (c'3inf), anhand der Anfangskegeligkeit des dritten Spiegels (c3), ab welcher das Teleskop, ohne das Vorhandensein der asphärischen Komponenten und für die Mindest-und die Höchst-Brennweite, durch die jeweils mit der Mindest- und der Höchst-Brennweite assoziierten asphärischen Komponenten kompensierbare Aberrationen aufweist, wobei die kompensierbaren Aberrationen der Astigmatismus und die Koma sind,
- Bestimmen (300) eines neuen Kegeligkeitswertes des dritten Spiegels (c'3), der Position (PCAi) und der Form der Oberfläche (Si) jeder asphärischen Komponente durch eine zweite Optimierung sodass die kompensierbaren Aberrationen korrigiert werden und die Bildqualität in der ersten Brennebene des Teleskops gemäß dem vorbestimmten Kriterium optimiert wird,

wobei die Form der Oberflächen der asphärischen Komponenten mindestens sphärische Aberration erster Ordnung ($Z9_{CA}$) und Fokus ($Z4_{CA}$) umfasst.

**17.** Verfahren nach Anspruch 16, ferner umfassend einen Schritt des Bestimmens (400) einer neuen Kegeligkeit des ersten (c'1) und des zweiten (c'2) Spiegels in einer Weise, dass die Bildqualität gemäß dem vorbestimmten Kriterium weiter verbessert wird.

**18.** Verfahren nach Anspruch 17, ferner umfassend einen Schritt (500) des Verfeinerns der Bestimmung der Form der Oberfläche (Si) jeder asphärischen Komponente, indem zusätzlich eine sphärische Aberration zweiter Ordnung ($Z16_{CA}$) in der Weise integriert wird, dass die Bildqualität gemäß dem vorbestimmten Kriterium weiter verbessert wird.


**Claims**

**1.** A three-aspherical-mirror anastigmat telescope (30) comprising at least a concave first mirror (M1), a convex second mirror (M2), a concave third mirror (M3) and a first detector (D), and having an optical axis (O),

- the three mirrors being arranged so that the first mirror (M1) and the second mirror (M2) form, from an object at infinity, an intermediate image disposed between the second mirror and the third mirror, the third mirror (M3) forming, from this intermediate image, a final image in a first focal plane ($P_F$) of the telescope, in which plane the first detector is placed, the first, second and third mirrors being of a set form **characterized by** at least a radius of curvature and a conicity,

the telescope furthermore comprising:

- means (5) for moving the third mirror (M3) linearly along the optical axis of the telescope (O) so as to make the focal length of the telescope change to a plurality of focal lengths (fi) between at least a minimum focal length (fmin) and a maximum focal length (fmax),

the telescope having at the minimum focal length a first exit pupil (PS1) in a first position (P1), and the telescope having at the maximum focal length a second exit pupil (PS2) in a second position (P2), **characterized in that** the telescope further comprises:

- a plurality of aspherical optical components (CAi) respectively being associated with the plurality of focal lengths (fi), placed in a plurality of positions (PCAi) respectively located between the first and the second position, each aspherical component being placed on an optical path of a beam corresponding to said associated focal length when the telescope is working at said associated focal length, and off the optical path associated with another focal length when the telescope is working at said other focal length,
- means (50) for changing the optical path placed between the aspherical components and the first detector (D), and configured so as that said first detector stays in in the first focal plane of the telescope,
- the third mirror having a conicity (c'3) determined from an initial conicity (c3),
the initial conicities (c3) being determined from the Korsch equations,
the conicity (c'3) being determined so that the telescope has, without said aspherical components being present and for the minimum and maximum focal lengths, compensable astigmatism and coma aberrations by said aspherical components,
- the position (PCAi) and the form of the surface (Si) of each aspherical component being determined so as to correct said compensable aberrations of said telescope for the associated focal length (fi) and to optimize the image quality in the first focal plane of the telescope according to a pre-set criterion, the form of the surface (Si) of each aspherical component comprising at least a first and a second aberration type, the first aberration type being the first-order spherical aberration ($Z9_{CA}$) and the second aberration type being the focus ($Z4_{CA}$).

**2.** The telescope according to claim 1, wherein said form of the surface of each aspherical component furthermore comprises a second-order spherical aberration ($Z16_{CA}$) in order to further improve image quality according to said criterion.

3. The telescope according to one of the preceding claims, wherein the conicity ($c'3$) differs from the initial conicity by more than 5% and by less than 30%.

4. The telescope according to one of the preceding claims, wherein a conicity of the first mirror ($c'1$) and a conicity of the second mirror ($c'2$) are respectively determined from an initial conicity of the first mirror ($c1$) and an initial conicity of the second mirror ($c2$),
the initial conicities ($c3$) being determined from the Korsch equations,
the conicities being determined so as to further improve the image quality of said telescope according to said criterion.

5. The telescope according to one of the preceding claims, wherein:

   - a positive astigmatism (A+) is defined as an astigmatism for which a tangential focal point is located before a sagittal focal point,
   - a negative astigmatism (A-) is defined as an astigmatism for which a sagittal focal point is located before a tangential focal point,
   - a positive coma is defined as a coma for which a shape of the image spot of a point source is a "comet", the tail of which is directed away from the optical axis, and
   - a negative coma is defined as a coma for which a shape of the image spot of a point source is a "comet", the tail of which is directed toward the optical axis,

   the compensable aberrations being positive astigmatism (A+) and positive coma (C+) for the maximum focal length, positive astigmatism (A+) and negative coma (C-) for the minimum focal length.

6. The telescope according to one of the preceding claims, wherein:

   - a positive astigmatism (A+) is defined as an astigmatism for which a tangential focal point is located before a sagittal focal point,
   - a negative astigmatism (A-) is defined as an astigmatism for which a sagittal focal point is located before a tangential focal point,

   and wherein the conicity of the third mirror ($c'3$) is determined so as to modify the sign of the astigmatism of the telescope for the minimum focal length, in the absence of aspherical optical component.

7. The telescope according to one of the preceding claims, for which the pre-set criterion consists in minimizing a wavefront error (WFE).

8. The telescope according to one of the preceding claims, for which said positions of the aspherical components are separated from one another by 50 mm at most.

9. The telescope according to one of the preceding claims, wherein at least one aspherical optical component is retractable so as to be placed on the optical path of the beam corresponding to the associated focal length when the telescope is working at said associated focal length, and off the optical paths associated with the other focal lengths when the telescope is working at one of these other focal lengths.

10. The telescope according to claim 9, wherein the aspherical optical components are retractable mirrors (MAi).

11. The telescope according to claim 10, wherein the retractable mirrors are mounted on a single holder (80), the positions of the retractable mirrors then being substantially identical.

12. The telescope according to claim 11, wherein said aspherical components are retractable mirrors (MAi) mounted on a single holder (80), said holder furthermore comprising a position in which no retractable mirror features on the optical path of the beam incident on said holder, the beam then passing through the holder along a secondary optical path (86), the telescope furthermore comprising:

   - an optical device (85) placed on the secondary optical path and configured to generate a second focal plane (P'$_F$) of the telescope corresponding to a chosen focal length (f), said optical device (85) furthermore being configured to correct said compensable aberrations of said telescope and to optimize the image quality in the second focal plane (P'$_F$) of the telescope according to said pre-set criterion and,

- a second detector (D') placed in the second focal plane of the telescope (P'$_F$), and sensitive in a second spectral band (SB2) that is different from a first spectral band of sensitivity (SB1) of the first detector.

13. The telescope according to claim 12, wherein the optical device (85) is designed to work in transmission in the second spectral band (SB2), wherein the first spectral band is comprised in the visible and the second spectral band is comprised in the infrared, and wherein the chosen focal length (f') has a value lower than the minimum focal length.

14. The telescope according to one of claims 1 to 9, wherein at least one aspherical component is a plate working in transmission.

15. The telescope according to one of the preceding claims comprising only two focal lengths, the minimum focal length and the maximum focal length.

16. A method (60) for determining parameters of a three-aspherical-mirror anastigmat telescope comprising a concave first mirror (M1), a convex second mirror (M2), a concave third mirror (M3), a first detector (D), a plurality of aspherical components (Can) and means (5) for moving the third mirror linearly along an optical axis (O) of the telescope so as to make the focal length of the telescope change according to a plurality of focal lengths (fi) between at least a minimum focal length (fmin) and a maximum focal length (fmax),

the three mirrors being arranged so that the first mirror and the second mirror form, from an object at infinity, an intermediate image located between the second mirror and the third mirror, the third mirror forming, from this intermediate image, a final image in the first focal plane of the telescope in which the first detector is placed, the first, second and third mirrors being of a set form **characterized by** at least a conic and a radius of curvature,

the telescope having at the minimum focal length a first exit pupil (PS1) at a first position (P1), and the telescope having at the maximum focal length a second exit pupil (PS2) at a second position (P2),

the plurality of aspherical optical components (CAi) respectively being associated with the plurality of focal lengths (fi), each aspherical component being placed on an optical path of a beam corresponding to said associated focal length when the telescope is working at said associated focal length, and off the optical path associated with another focal length when the telescope is working at said other focal length,

said aspherical components being respectively placed at a plurality of positions (PCAi) located between the first and second position,

the method comprising steps consisting in:

- determining (100) and radii of curvature values, termed initial values of the first (c1, R1), second (c2, R2) and third (c3, R3) mirrors of said telescope, that are compatible with the minimum focal length (fmin) and the maximum focal length (fmax), in the absence of said aspherical components, from the Korsch equations, via a first optimization of the image quality in the first focal plane of the telescope according to a pre-set criterion,

- determining (200) a conicity value for the third mirror (c'3inf), from the initial conicity of the third mirror (c3), with which value the telescope has, in the absence of said aspherical components and at the minimum and maximum focal lengths, aberrations that are compensable by the aspherical components respectively associated with said minimum and maximum focal lengths, the compensable aberrations being astigmatism and coma,

- determining (300) a new conicity value for the third mirror (c'3), the position (PCAi) and the form of the surface (Si) of each aspherical component by a second optimisation, so as to correct said compensable aberrations and to optimise image quality in the first focal length of the telescope according to the pre-set criterion,

the form of said surfaces of the aspherical components comprising at least first-order spherical aberration (Z9$_{CA}$) and focus (Z4$_{CA}$).

17. The method according to claim 16, further comprising a step consisting in determining (400) a new conicity for the first (c'1) and second (c'2) mirrors so as to further improve image quality according to the pre-set criterion.

18. The method according to claim 17, further comprising a step (500) consisting in refining the determined form of the surface (Si) of each aspherical component by furthermore incorporating a second-order spherical aberration (Z16$_{CA}$) so as to further improve image quality according to the pre-set criterion.

FIG.1

FIG.2a

FIG.2b

FIG.3a

FIG.3b

FIG.4a

FIG.4b

FIG.4c

# FIG.4d

FIG.5a

FIG.5b

EP 3 336 594 B1

A⁺

Z5/6 > 0

Z7/8 > 0

C⁺

A⁻

Z5/6 < 0

Z7/8 < 0

C⁻

FIG.6

FIG.7

FIG.8

FIG.9

FIG.10

CA

PS

Z9$_{CA}$ > 0

M3

**Z4**

Champ Y (°)

0.6
0.4
0.2
-0.0
-0.2
-0.4
-0.6

-0.6 -0.4 -0.2 -0.0 0.2 0.4 0.6
Champ X (°)

**Z5/6**

**Z7/8**

**Z9**

## FIG.11a

CA

PS

Z9$_{CA}$ < 0

M3

**Z4**

Champ Y (°)

0.6
0.4
0.2
-0.0
-0.2
-0.4
-0.6

-0.6 -0.4 -0.2 -0.0 0.2 0.4 0.6
Champ X (°)

**Z5/6**

**Z7/8**

**Z9**

## FIG.11b

FIG.12a

FIG.12b

FIG.13

EP 3 336 594 B1

FIG.14a

FIG.14b

FIG.15

EP 3 336 594 B1

FIG.16a

FIG.16b

FIG.17

FIG.18

FIG.19

FIG.20a

FIG.20b

FIG.21

FIG.22

60

100

Déterminer (R1,c1) ; (R2,c2) ; (R3, c3)
pour fmin et fmax
à partir des équations de Korch

200

Déterminer une valeur de conique de M3 c'3inf à
partir de laquelle le télescope présente, sans les
CAi, des aberrations compensables par les CAi
i = 1 ...n

300

Déterminer (c'3, PCAi, Si) pour i = 1 ...n
optimisant la qualité d'image
chaque Si comprenant de l'aberration sphérique
du premier ordre et du focus

400

Déterminer (c'1, c'2)
de manière à augmenter la qualité d'image

500

Affiner les Si en intégrant de l'aberration sphérique
du deuxième ordre

FIG.23

FIG.24

**RÉFÉRENCES CITÉES DANS LA DESCRIPTION**

**Documents brevets cités dans la description**

- US 6084727 A
- US 6333811 B
- US 4993818 A
- US 5144476 A

**Littérature non-brevet citée dans la description**

- Three mirror anastigmatic zoom system using deformable mirrors. **ZHAO XIN et al.** INTERNATIONAL SYMPOSIUM ON PHOTOELECTRONIC DETECTION AND IMAGING 2011: SPACE EXPLORATION TECHNOLOGIES AND APPLICATIONS. SPIE, 09 Juin 2011, vol. 8196, 1-8